# EUROPEAN PATENT APPLICATION

(11) **EP 4 823 219 A1**
(43) Date of publication of application: **14.10.2026**
(21) Application number: 23960450.7
(22) Date of filing: 05.12.2023
(51) Int. Cl.: H04W 74/0833

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: RGTH
(86) International application number: PCT/CN2023/136415
(87) International publication number: WO 2025/118135

(57) **Abstract**

Provided are a wireless communication method and a communication device. The method comprises: a first terminal device sends a preamble to a target device; the first terminal device receives a first index sent by the target device, the first index being used for indicating the preamble received by the target device; in response to the first index being identical to an index of the preamble, the first terminal device sends a first terminal device identifier to the target device; and the first terminal device receives first information sent by the target device, the first information comprising the terminal device identifier received by the target device, and the target device comprising a network device and/or a second terminal device. In embodiments of the present application, the first terminal device can perform a random access procedure on the basis of the first terminal device identifier. Compared with a conventional random access procedure, a reduction of power consumption of the terminal device in the random access procedure is facilitated.

## Description

### TECHNICAL FIELD

This application relates to the field of communications technologies, and more specifically, to a wireless communication method and a communications device.

### BACKGROUND

A legacy random access procedure is excessively complex, which may lead to relatively large power consumption of a terminal device. In some scenarios, to reduce power consumption of the terminal device, a reduced capability terminal device (for example, an electronic tag) is introduced. Compared with a legacy terminal device, this type of terminal device supports a relatively simple communication manner. In this case, if this type of terminal device still accesses a network device in a legacy random access manner, power consumption of the terminal device may be increased.

### SUMMARY

This application provides a wireless communication method and a communications device. Various aspects of this application are described below.

According to a first aspect, a wireless communication method is provided, and the method includes: transmitting, by a first terminal device, a preamble to a target device; receiving, by the first terminal device, a first index transmitted by the target device, where the first index is used to indicate a preamble received by the target device; in response to that the first index is the same as an index of the preamble, transmitting, by the first terminal device, a first-terminal device identity to the target device; and receiving, by the first terminal device, first information transmitted by the target device, where the first information includes a terminal device identity received by the target device. The target device includes a network device and/or a second terminal device.

According to a second aspect, a random access method is provided, and the method includes: receiving, by a target device, a preamble transmitted by a first terminal device; transmitting, by the target device, a first index to the first terminal device, where the first index is used to indicate a preamble received by a network device; receiving, by the target device, a terminal device identity transmitted by a terminal device; and transmitting, by the target device, first information to the terminal device, where the first information includes a terminal device identity received by the target device. The target device includes a network device and/or a second terminal device.

According to a third aspect, a terminal device is provided, where the terminal device is a first terminal device and includes: a transmitting unit, configured to transmit a preamble to a target device; a receiving unit, configured to receive a first index transmitted by the target device, where the first index is used to indicate a preamble received by the target device. The transmitting unit is configured to transmit a first-terminal device identity to the target device in response to that the first index is the same as an index of the preamble. The receiving unit is configured to receive first information transmitted by the target device, where the first information includes a terminal device identity received by the target device. The target device includes a network device and/or a second terminal device.

According to a fourth aspect, a communications device is provided, where the communications device is a target device and includes: a receiving unit, configured to receive a preamble transmitted by a first terminal device; a transmitting unit, configured to transmit a first index to the first terminal device, where the first index is used to indicate a preamble received by a network device. The receiving unit is configured to receive a terminal device identity transmitted by the terminal device. The transmitting unit is configured to transmit first information to the terminal device, and the first information includes a terminal device identity received by the target device. The target device includes a network device and/or a second terminal device.

According to a fifth aspect, a terminal device is provided, and the terminal device includes a processor, a memory, and a communications interface. The memory is configured to store one or more computer programs, and the processor is configured to invoke the computer program in the memory to cause the terminal device to execute some or all of the steps in the method according to the first aspect.

According to a sixth aspect, a communications device is provided, including a processor, a memory, and a transceiver. The memory is configured to store one or more computer programs, and the processor is configured to invoke the computer program in the memory to cause the communications device to execute some or all of the steps in the method according to the second aspect.

According to a seventh aspect, an embodiment of this application provides a communications system, where the system includes the foregoing terminal device and/or the foregoing communications device. In another possible design, the system may further include another device that interacts with the terminal device or the network device in the solution provided in embodiments of this application.

According to an eighth aspect, an embodiment of this application provides a computer-readable storage medium. The computer-readable storage medium stores a computer program, and the computer program causes a communications device (for example, a terminal device or a communications device) to execute some or all of the steps in the method according to the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a communications device) to execute some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a first terminal device may perform a random access procedure based on a first-terminal device identity, which helps reduce power consumption of the terminal device in the random access procedure compared with that in a legacy random access procedure.

### BRIEF DESCRIPTION OF DRAWINGS

FIG. 1 shows a wireless communications system 100 to which embodiments of this application are applied.
FIG. 2A is a schematic diagram of a legacy four-step random access procedure.
FIG. 2B is a flowchart of a contention-free random access procedure.
FIG. 2C is a schematic diagram of a legacy two-step random access procedure.
FIG. 2D is a flowchart of another legacy two-step random access procedure.
FIG. 3 is a schematic diagram of an A-IoT communications system to which embodiments of this application are applicable.
FIG. 4A to FIG. 4D are schematic diagrams of four topology network structures of an A-IoT communications system to which embodiments of this application are applicable.
FIG. 5 is a schematic diagram of a receiving process of an RF receiver to which embodiments of this application are applicable.
FIG. 6 is a schematic diagram of a receiving process of an intermediate frequency receiver to which embodiments of this application are applicable.
FIG. 7 is a schematic flowchart of an initial access procedure of radio frequency identification (radio frequency identification, RFID).
FIG. 8 is a schematic flowchart of a wireless communication method according to an embodiment of this application.
FIG. 9 is a schematic diagram of an indication manner of a second time domain resource according to an embodiment of this application.
FIG. 10 is a schematic diagram of a time domain resource for transmitting a preamble and a time domain resource for transmitting a terminal device identity according to an embodiment of this application.
FIG. 11 is a schematic diagram of an indication manner of a first time domain resource according to an embodiment of this application.
FIG. 12 is a schematic flowchart of a random access method according to an embodiment of this application.
FIG. 13 is a schematic flowchart of a random access method according to another embodiment of this application.
FIG. 14 is a schematic flowchart of a random access method according to another embodiment of this application.
FIG. 15 is a schematic flowchart of a random access method according to another embodiment of this application.
FIG. 16 is a schematic diagram of a terminal device according to an embodiment of this application.
FIG. 17 is a schematic diagram of a communications device according to an embodiment of this application.
FIG. 18 is a schematic diagram of a structure of a communications apparatus according to an embodiment of this application.

### DESCRIPTION OF EMBODIMENTS

Technical solutions in this application are described below with reference to the accompanying drawings.

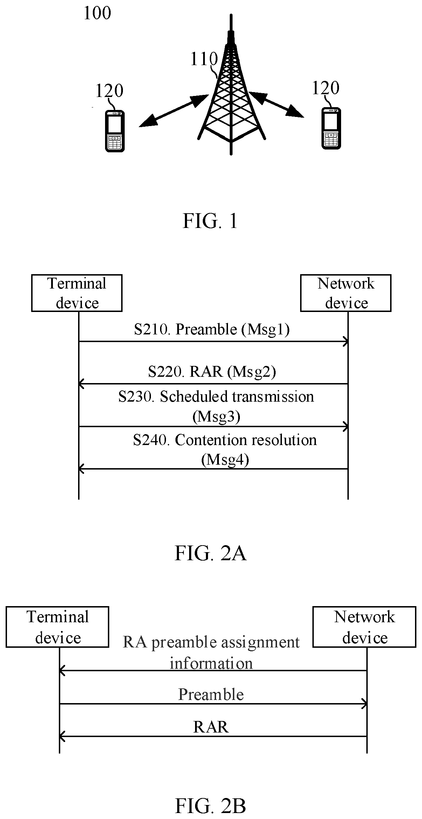

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographical area, and may communicate with the terminal device 120 located within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a user unit, a user station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a Node B (NodeB), an evolved NodeB (evolved NodeB, eNB), a next-generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home eNodeB, a network controller, an access node, a radio node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

It should be understood that all or some of functions of the communications device in this application may alternatively be implemented by software functions running on hardware, or by virtualization functions instantiated on a platform (for example, a cloud platform).

### Random access procedure

In some protocols, two random access procedures are specified: two-step random access channel (2-step random access channel, 2-step RACH) and four-step random access channel (4-step random access channel, 4-step RACH). The 4-step RACH procedure was introduced in LTE systems, and is also applied in NR systems. The legacy 4-step random access procedure is introduced below with reference to FIG. 2A. Generally, before initiating a RACH procedure, a terminal device may first obtain a PRACH resource configuration from system information or dedicated signalling. Then, step S210 to step S240 may be performed.

In step S210, the terminal device transmits a preamble (preamble) to a network device. The preamble may be referred to as a message1 (message1, Msg1) in a MAC layer protocol.

Generally, after the preamble is transmitted, the terminal device may wait for, in a reception window (reception window), a message2 (message2, Msg2) fed back by the network device. A start time and an end time of the reception window are set based on a configuration parameter. From a perspective of the network device, the network device can distinguish between preambles received in different time-frequency domains or different preambles received in a same time-frequency domain. However, the network device cannot distinguish between same preambles transmitted by a plurality of terminal devices and received in a same time-frequency domain. In this case, an access conflict occurs.

In step S220, the network device transmits the message2 to the terminal device.

Generally, the message2 may be a group-transmitted message, that is, the message2 may include random access response (random access response, RAR) messages for a plurality of terminal devices. Addressing information of the message2 is included in a group identifier called random access network temporary identifier (random access network temporary identifier, RA-RNTI), and is used to identify time domain resource information, frequency domain resource information, and carrier type information of a received preamble, where the carrier type information is used to indicate that a carrier in which the preamble is located is an SUL carrier or an NUL carrier.

That is to say, a message2 may include RARs corresponding to preambles received from a same carrier and a same time-frequency point. An RAR IE transmitted to each terminal device may include a temporary identifier (e.g., temporary cell-radio network temporary identifier, T_C_RNTI) configured by the network device for the terminal device, a timing advance (used for uplink synchronization), an uplink grant (UL-GRANT) used for transmitting a message3 (message3, Msg3), and an index of a preamble received by the network device.

In some implementations, the message2 may further include a backoff (backoff) parameter, which is used to mitigate conflicts between preambles. In this case, in a case that the terminal device decides to transmit the preamble again, a random time is generated based on the backoff parameter, so that a transmitting time of the preamble transmitted again is at least later than the generated random time.

In step S230, if the terminal device confirms that the network device receives the preamble transmitted by the terminal device, the terminal device transmits the message3, also referred to as "scheduled transmission (scheduled transmission)", to the network device based on the UL-GRANT. The message3 includes a terminal device identity (also referred to as a terminal device ID).

Generally, the terminal device may determine, based on preamble indexes in the RA-RNTI and RAR, whether the network device receives a preamble transmitted by the terminal device. If the terminal device confirms that the network device receives the preamble transmitted by the terminal device, the terminal device transmits the message3 based on the UL-GRANT, where the message3 includes at least an identity of a terminal (terminal device ID). The message3 may be addressed on a physical layer by using T_C_RNTI.

Then, the terminal device may start a timer, and detect a downlink control channel PDCCH of a bearer message4 during running of the timer. If a plurality of terminal devices contend in step S210, the contention still occurs in step S230, because the plurality of terminal devices transmit the message3 based on a same UL-GRANT. However, different terminal identities are included in a MAC CE of the message3.

In step S240, if the network device correctly decodes the message3, the network device may transmit a message4 (message4, Msg4) to the terminal device. This message is also referred to as "contention resolution (contention resolution)".

Generally, the message4 is addressed by using T_C_RNTI in the received message3, and its MAC CE includes a terminal device identity included in the message3 by the terminal device and a newly assigned C-RNTI.

If a plurality of terminal devices transmit messages3 on a same UL GRANT, the network device may correctly decode one message3 or fail to decode (for example, in a case that interference levels between the messages3 transmitted by the plurality of terminal devices are comparable). Therefore, when receiving the message4, if the terminal device finds that the T_C_RNTI scrambled on a physical downlink control channel (physical downlink control channel, PDCCH) matches the message3 transmitted by the terminal device, the terminal device further checks whether a medium access control control element (medium access control control element, MAC CE) in the message4 transmitted by the network device includes the terminal device identity of the terminal device. Then, if the message4 includes the identity of the terminal device, the terminal device can confirm that a random access procedure is completed, and use the newly assigned C-RNTI as an identity of the terminal device. The identity is used for addressing information of subsequent physical layer, MAC, and radio resource control (radio resource control, RRC) layer protocols.

The random access procedure described above with reference to FIG. 2A may also be referred to as a contention-based random access (contention based random access, CBRA) procedure. In some protocols, a contention-free random access (non contention or contention free random access, CFRA) procedure is further introduced. FIG. 2B shows a flowchart of a contention-free random access procedure. In the contention-free random access procedure, the network device may assign a specific random access resource to the terminal device. Correspondingly, the network device may identify a specific terminal device by using a random access preamble.

Referring to FIG. 2B, the network device transmits RA preamble assignment information (RA preamble assignment) to the terminal device. Then, in response to the RA preamble assignment information, the terminal device may transmit a preamble to the network device. Correspondingly, a MAC processing process in the network device is the same as the contention-based random access procedure. After receiving the preamble, the network device may transmit a random access response (random access response, RAR) to the terminal device. Correspondingly, a processing process of the terminal device is the same as the contention-based random access procedure.

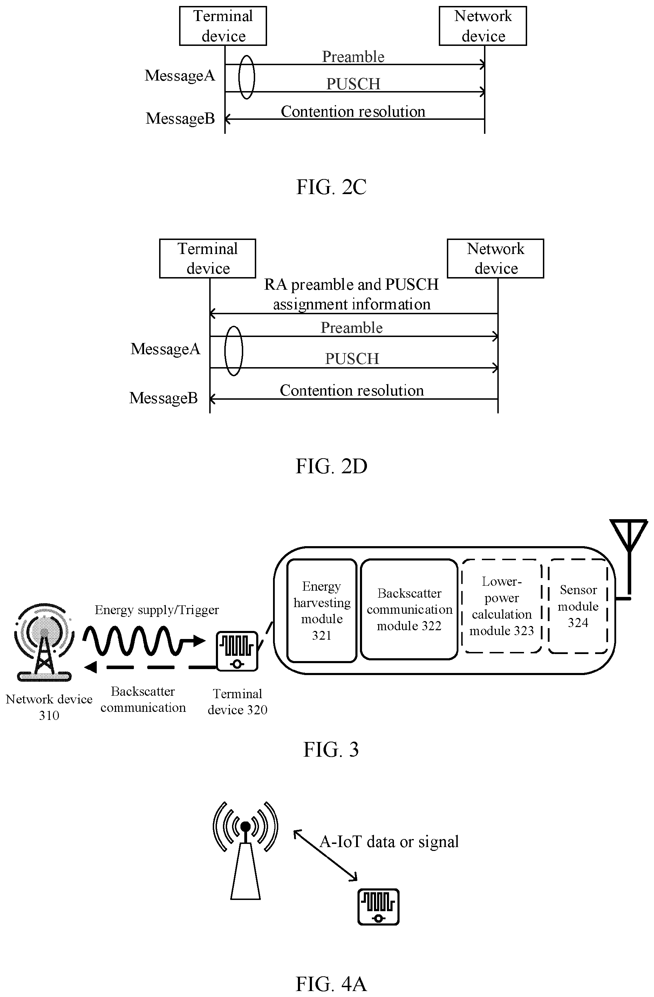

Differences between the two-step random access procedure and the four-step random access procedure lie in that: in the two-step random access procedure, the messageA includes the message1 and the message3 in the four-step random access procedure, and the messageB includes the message2 and the message4 in the four-step random access procedure. FIG. 2C and FIG. 2D show legacy 2-step random access procedures.

Referring to FIG. 2C, a terminal device transmits a messageA to a network device, where the messageA includes a preamble and a physical uplink shared channel (physical uplink shared channel, PUSCH), and the PUSCH includes a terminal device identity of the terminal device. Then, the network device transmits a messageB (also referred to as a "contention resolution message") to the terminal device. There are two manners for addressing the terminal device in the messageB: Manner 1 and Manner 2.

In Manner 1, if the terminal device identity in the messageA is a cell radio network temporary identifier (cell-radio network temporary identifier, C-RNTI), a C-RNTI is also scrambled on a PDCCH carried in the messageB. In this case, if the terminal device can confirm that the C-RNTI scrambled on the PDCCH of the messageB (also referred to as contention resolution) matches the C-RNTI of the terminal device, the random access procedure is successful, that is, the contention has been resolved.

Generally, Manner 1 is applicable to a terminal device in the RRC_CONNECTED state, that is, the terminal device has completed initial access, and an RRC connection is established between the terminal device and the network device.

In Manner 2, if the terminal device identity in the messageA is another identifier other than the C-RNTI, an RA-RNTI is scrambled on the PDCCH that carries the messageB. Correspondingly, if the terminal device identity included in a successful RAR (SuccessRAR) in the messageB matches the terminal device identity of the terminal device, the terminal device considers the random access procedure successful and the contention resolved. Otherwise, the terminal device may select to retransmit the messageA, or the terminal device falls back to a four-step random access procedure.

Generally, Manner 2 is applicable to scenarios other than those applicable to Manner 1.

Referring to FIG. 2D, a network device transmits assignment information (also referred to as assignment information for an RA preamble and a PUSCH) to a terminal device, so as to assign transmission resources for transmitting the preamble and the PUSCH. Then, the terminal device transmits a messageA to the network device based on the assignment information, where the messageA includes the preamble and the PUSCH, and the PUSCH includes a terminal device identity of the terminal device. Next, the network device transmits a messageB (also referred to as a "random access response") to the terminal device.

### Internet of things (internet of thing, IoT) technology

The rise of the IoT technology poses new challenges for communications systems. Use scenarios of IoT terminal devices may include logistics, warehousing, factory automation, animal husbandry, and the like. An IoT terminal device and a network device may perform intermittent simple communication or rough positioning and tracking. Even the simplest IoT terminal devices, such as NB-IoT terminal device used for coal and electricity meter measurement, batteries are required for providing energy. However, although energy consumption of the IoT terminal devices is very low, the batteries inside the IoT terminal devices can last at most a few years and will eventually be depleted. Therefore, the batteries of the IoT terminal devices need to be replaced regularly, which consumes a large quantity of manpower. Moreover, some industrial scenarios are not suitable for manual operation due to inherent dangers. Therefore, battery-free IoT terminal devices emerge as required.

Battery-free IoT terminal devices are numerous, low-cost, and generally require no manual maintenance after installation. Radio frequency identification (radio frequency identification, RFID) terminal devices may meet a requirement for the battery-free IoT terminal devices to some extent. However, operation of RFID systems still requires human involvement, for example, manual handheld readers (reader) are required in some RFID systems. In addition, wireless coverage of a single RFID reader is limited (within 10 meters). Therefore, RFID systems deployed on a large scale require more human involvement. For example, it requires considerable manpower, material resources, and time to inventory goods in a large supermarket by using an RFID system.

### Ambient IoT (ambient IoT, A-IoT) communications system

Transplanting a system such as an RFID into a cellular network may effectively solve the problem of limited coverage, because cellular networks (such as 4th generation (4th generation, 4G) and 5G systems) have already achieved nationwide coverage or at least coverage of major cities in some countries or regions (such as China, Europe, and the United States). Based on a broader network coverage, a process of communication or positioning between an IoT terminal device and a network device may not require human involvement. Therefore, the IoT terminal device may work continuously, and working efficiency is high. In addition, the IoT terminal device may even work efficiently in an environment unsuitable for humans (such as a wilderness, a mine, or a factory). Therefore, during application of the IoT terminal device, apart from the initial step of associating the IoT terminal device with a specific object, subsequent data read/write and operation and maintenance may be performed by means of, for example, an APP on a smartphone, which is very convenient and efficient. Such a communications system may be referred to as an ambient IoT communications system or a zero-power communications system.

As shown in FIG. 3, an A-IoT communications system may include a network device 310 and a terminal device 320. The network device 310 may be, for example, a reader. The terminal device 320 is also referred to as an A-IoT device, for example, may be a tag (tag), and is also referred to as an electronic tag. Generally, energy source of an A-IoT device comes from the surrounding environment, such as radio frequency (radio frequency, RF) wave, solar energy, thermal energy, mechanical vibration, wind energy, or the like. Correspondingly, the A-IoT communications system uses energy harvesting and backscatter communication technologies, and the network device 310 may transmit a wireless energy supply signal and a downlink communication signal to the terminal device 320, and receive a backscatter signal from the terminal device 320.

As shown in FIG. 3, the terminal device 320 may include an energy harvesting module 321, a backscatter communications module 322, and a low-power calculation module 323. In some other scenarios, the terminal device 320 may further include a memory module (not shown in the figure) configured to store some basic information (such as an article identity). In some other scenarios, the terminal device 320 may further include a sensor module 324, configured to acquire sensing data such as an ambient temperature and an ambient humidity.

In some protocols, use cases of the A-IoT communications system may include four major categories: inventory (inventory), sensor (sensor), tracking (tracking), and command (command). Inventory refers to checking for missing or surplus goods when goods enter or leave a warehouse. Common sensors may include temperature, pressure, humidity, and other sensors, and the sensors may be used in industrial, agricultural, and smart city applications or the like, and information collected by the sensors may be uploaded to a third-party application (application, App) through the A-IoT system for monitoring and management. Tracking generally refers to acquiring an approximate location of an object from time to time, for example, users can know locations of their packages in real time through a smartphone. Command refers to operating a servo mechanism through the A-IoT system, and the servo mechanism may be connected to an A-IoT terminal device. For example, people may water the flowers and plants in the backyard through a mobile phone App while working or resting in the office, where the watering servo mechanism may be connected to a specific A-IoT terminal device.

In some protocols, the A-IoT communications system includes four topology network structures shown in FIG. 4A to FIG. 4D. Referring to FIG. 4A, data or signals (also referred to as A-IoT data or signals) may be directly transmitted between a network device and an A-IoT device.

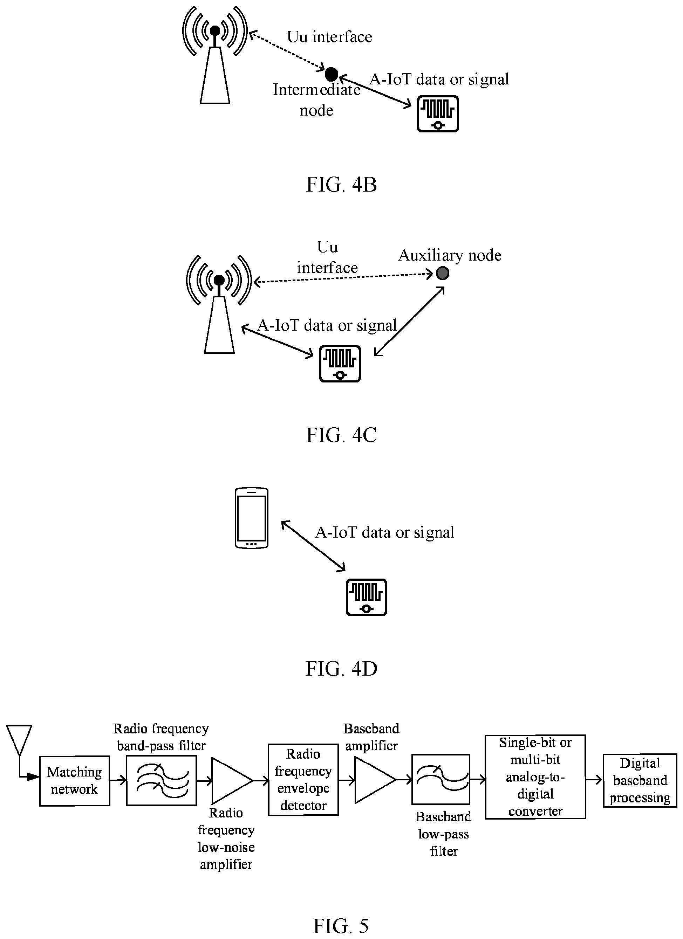

Referring to FIG. 4B, communication may be performed between a network device and an A-IoT device by using an intermediate node, where data or information transmitted between the intermediate node and the terminal device is also referred to as A-IoT data or signals. The intermediate node may be another network device. In this case, the intermediate node may communicate with the network device by using a Uu interface. For example, the intermediate node may transmit data or signals to the network device by using the Uu interface, and the intermediate node may receive, by using the Uu interface, data or signals transmitted by the network device.

Referring to FIG. 4C, communication may be performed between a network device and an A-IoT device by using an auxiliary node. Data or information transmitted between the auxiliary node and the terminal device is also referred to as A-IoT data or signals, and data or information transmitted between the terminal device and the network device is also referred to as A-IoT data or signals. The auxiliary node may be another network device. In this case, the auxiliary node may receive only data or signals transmitted by the network device by using the Uu interface. In this case, the auxiliary node cannot transmit data or signals to the network device.

Referring to FIG. 4D, data or signals (also referred to as A-IoT data or signals) may be directly transmitted between a terminal device and an A-IoT device.

In some protocols, A-IoT devices can be classified into three types: Type A, Type B, and Type C. Type A and Type B terminal devices can only perform communication by reflecting and modulating received radio waves, and this communication method is called back-scattering (back-scattering). That is to say, Type A and Type B terminal devices cannot actively transmit radio signals, and power thereof ranges from 1 to 10 microwatts (uW). Type A terminal devices have the lowest transmit power and the lowest hardware complexity, basically close to a level of an RFID terminal device. Type B terminal devices have slightly more complex hardware, which may include signal amplification devices and specific energy storage devices, and thus a communication distance between Type B terminal device and a network device is farther than a communication distance between Type A terminal device and the network device. Type C terminal devices generally have a capability to actively transmit radio waves, with a transmit power ranging approximately from 1 to 10 milliwatts (mW), and can store a specific amount of energy. All three types of terminal devices can harvest energy from the environment and can work continuously for several years or more than 10 years. In addition, Type A and Type B terminal devices are basically in a sleep state before the network device triggers a communication process with them in order to save energy. Only after being activated by a wireless signal from the network device, Type A and Type B terminal devices start working.

Currently, receivers of A-IoT devices can include two major types: a receiver type 1 and a receiver type 2. The receiver type 1 is a wideband receiver, and this type of receiver is also called an RF receiver. The RF receiver may acquire signals to be received within a bandwidth range based on a radio frequency band-pass filter, and then perform envelope detection and subsequent baseband processing. The RF receiver has the simplest structure, with a minimum power consumption of up to several uW or less. However, because of poor accuracy of the radio frequency band-pass filter, even when a target signal occupies a narrow bandwidth, the RF receiver usually receives a signal in a relatively wide bandwidth. Therefore, a relatively large quantity of noise and interference are introduced in a receiving process of the RF receiver, and receiving performance of the RF receiver is poor, or in other words, receiving sensitivity is poor. A typical receiving process of the RF receiver may be shown in FIG. 5.

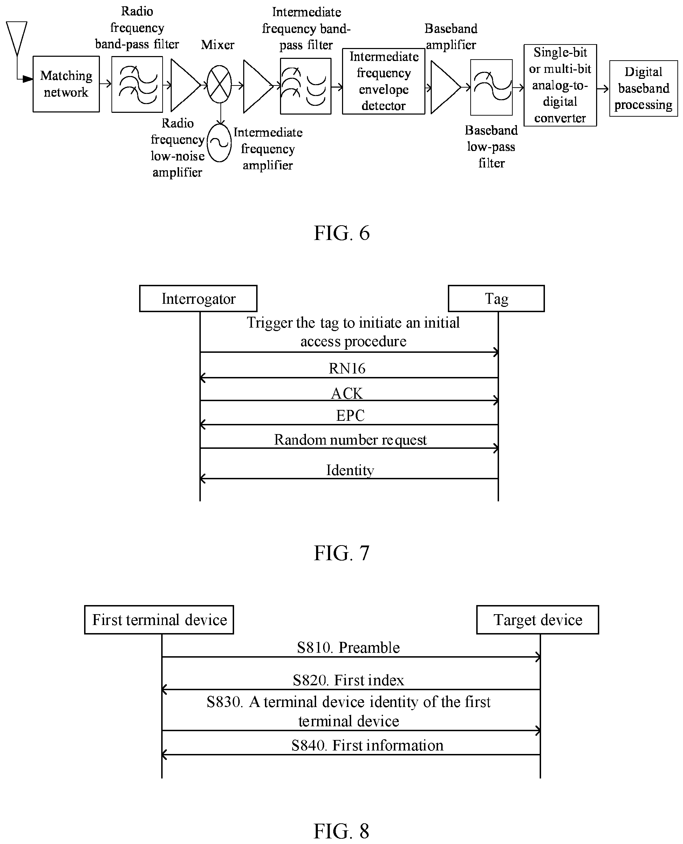

The receiver type 2 is a narrowband receiver, and this type of receiver may include an intermediate frequency receiver or a zero intermediate frequency receiver. In signal reception, the narrowband receiver, in addition to obtaining a signal to be received in a bandwidth range by using a radio frequency band-pass filter, may also perform down-conversion on an RF signal, and further perform filtering on a baseband signal by using a low-pass filter to eliminate noise and interference. Therefore, a receiving band width of the narrowband receiver is narrow, and receiving performance of the narrowband receiver is good, or in other words, receiving sensitivity is relatively high. However, the narrowband receiver needs to use a local oscillator (local oscillator, LO). The power consumption of an LO is relatively high, and even a recommended LO needs to consume 100uW or even higher power. Therefore, the relative power consumption of the narrowband receiver is relatively high. However, because the absolute power consumption of the narrowband receiver is very low, the narrowband receiver is still applicable to a zero-power device. A typical receiving process of an intermediate frequency receiver may be shown in FIG. 6.

In some scenarios, the Type A terminal devices usually adopt broadband receivers, Type C communications devices usually adopt narrowband receivers, and Type B terminal devices may adopt one or two types of receivers.

### Initial access procedure of RFID

In some protocols, an initial access procedure adjusted for IoT systems has been introduced. FIG. 7 shows a schematic flowchart of an initial access procedure of RFID. An interrogator (interrogator) may be the network device described above. Referring to FIG. 7, the interrogator (interrogator) may initiate a query (Query) to a tag to trigger the tag to initiate an initial access procedure. The tag then transmits a 16-bit random number (represented by "RN16") to the interrogator. In this process, if another tag also transmits a random number through a same channel at essentially a same time, the first contention will occur during the interrogator's reception. If the interrogator responds with a correctly decoded random number through ACK acknowledgment, for the tags, a tag that successfully contends will receive a random number same as that transmitted by the tag, while a tag that fails in contention will receive a random number different from that transmitted by the tag.

For the tag that successfully contends, an EPC or related information of the tag may be transmitted to the interrogator. Correspondingly, the interrogator repeatedly feeds back a same random number (the one correctly decoded) to the tag through a random number request (Req_RN), and then the tag feeds back a handle (handle) to the interrogator as the handle of the tag in subsequent procedures, where the handle is also a 16-bit random number. Then, the interrogator may transmit a command to the tag, and the handle of the tag is written into the command.

In the initial access procedure of RFID, the handle (handle) that is used by the tag in subsequent procedures is actually generated by the tag. This approach is more suitable for RFID because coverage of the interrogator is typically small, and a length of the handle is sufficient to distinguish between different RFIDs. However, this initial access procedure cannot be applicable to a scenario in which coverage of a network device is relatively large. In such scenario, the handle (handle) may not allow the network device to distinguish between different terminal devices due to insufficient length. However, a legacy random access procedure is excessively complex, which may lead to relatively large power consumption for the terminal device. In this case, introducing of a reduced capability terminal device (for example, the electronic tag described above) to reduce power consumption is limited.

Therefore, for the foregoing problems, an embodiment of this application provides a wireless communications method to reduce power consumption of a terminal device (also referred to as a "first terminal device") in a random access procedure. With reference to FIG. 8, the following describes a wireless communication method according to an embodiment of this application. In some implementations, the first terminal device may be a low-power device. In some implementations, the first terminal device is the A-IoT device described above, for example, may be a Type A terminal device. For another example, the first terminal device may be a Type B terminal device. For another example, the first terminal device may be a Type C terminal device. Certainly, in embodiments of this application, the terminal device may alternatively be a terminal device in an IoT system.

In some implementations, a target device shown in FIG. 8 may be a second terminal device. In this case, the first terminal device may access a network by using the second terminal device. That is to say, the second terminal device may serve as an auxiliary node or an intermediate node for communication between the first terminal device and the network device, to help the first terminal device access the network device. In some other implementations, the target device may be another network device other than a network device that the terminal device intends to access, that is, the network device serving as the target device may be used as an auxiliary node or an intermediate node for communication between the first terminal device and the network device (the network device that the terminal device attempts to access), to help the first terminal device access the network device. Certainly, in embodiments of this application, the target device may be the network device that the terminal device attempts to access. In this case, the first terminal device may directly communicate with the network device to attempt to access the network device.

In embodiments of this application, the network device may be a general term for network nodes that include a reader. Certainly, the network device may alternatively include only a node that individually provides backscatter radio waves to the first terminal device.

In embodiments of this application, the first terminal device and the second terminal device are not limited. In some implementations, the second terminal device may have a higher capability than the first terminal device. For example, the second terminal device may be a smart terminal device, and the first terminal device may be the electronic tag described above. In some other implementations, the second terminal device and the first terminal device may be terminal devices with similar capabilities.

FIG. 8 is a schematic flowchart of a wireless communication method according to an embodiment of this application. The method illustrated in FIG. 8 includes step S810 to step S840.

In step S810, the first terminal device transmits a preamble to the target device.

In some implementations, the preamble may be generated based on a sequence. For example, the preamble may be generated based on a plurality of fixed sequences, compared with a legacy preamble that is generated based on a derived sequence from a root sequence, a preamble generation manner is simplified, so as to reduce power consumption required by the first terminal device to generate the preamble.

In some implementations, a quantity of the plurality of sequences may be limited, for example, a quantity of the plurality of sequences may be 2⁴ = 16. In embodiments of this application, the preamble may be generated based on a limited quantity of sequences, which helps simplify complexity of generating the preamble.

In embodiments of this application, a process of generating the preamble may be simplified in another manner. In some implementations, the sequence used in embodiments of this application may employ a relatively simple orthogonal manner, For example, a minimum mean square error pair sequence may be used. In some implementations, the sequence used in embodiments of this application may use a relatively simple modulation scheme, for example, binary on-off keying (on-off keying, OOK) may be used for modulation. In some implementations, a length of the preamble used in embodiments of this application may be shorter than a length of a preamble used in a legacy random access procedure.

In some implementations, preambles generated based on different sequences may correspond to different indexes to facilitate identification by the network device.

In some implementations, transmission of the preamble may be used as the first piece of information in a random access procedure. Therefore, the preamble may be referred to as a message1 (Msg 1).

In step S820, the target device transmits a first index to the first terminal device.

In some implementations, the first index is used to indicate a preamble received by the target device. Therefore, the first index may also be referred to as a "preamble index".

In some implementations, if the target device successfully receives and demodulates the preamble, the target device transmits the first index corresponding to the preamble. Therefore, the target device transmitting the first index to the terminal device may be understood as that the target device successfully receives and demodulates the preamble indicated by the first index.

In some implementations, transmission of the first index may be used as the second piece of information in the random access procedure. Therefore, information including the first index (that is, third information described below) may be referred to as a message2 (Msg 2).

In step S830, the first terminal device transmits a first-terminal device identity to the target device in response to that the first index is the same as an index of the preamble.

In some implementations, if the first index is the same as the index of the preamble, it may be indicated that a preamble successfully received and demodulated by the network device is the preamble transmitted by the first terminal device. In this case, the first terminal device may transmit the first-terminal device identity to the target device.

In some implementations, if the first index is different from the index of the preamble, it may be indicated that a preamble successfully received and demodulated by the network device is not the preamble transmitted by the first terminal device. In this case, the first terminal device may consider that contention resolution fails.

In some implementations, the first-terminal device identity may be generated by the first terminal device. For example, the first-terminal device identity may be a random number generated by the first terminal device. Compared with a legacy random access procedure, a length of a terminal device identity configured by the network device for the terminal device is relatively short, which helps reduce power consumption required by the first terminal device for transmitting the first-terminal device identity. For example, a length of the first-terminal device identity may be 16 bits.

In some implementations, transmission of the first-terminal device identity may be used as the third piece of information in the random access procedure. Therefore, information including the terminal device identity (that is, fourth information mentioned below) may be referred to as a message3 (Msg 3).

In some implementations, a time domain resource for transmitting the first-terminal device identity may be randomly selected by the first terminal device.

Correspondingly, in the step S830, from a perspective of the target device, the target device receives a terminal device identity transmitted by the terminal device. The terminal device may be the first terminal device, or the terminal device includes another terminal device and the first terminal device.

In some implementations, the terminal device may be the terminal device that transmits the preamble in step S810. For example, the terminal device that transmits the preamble may be a plurality of terminal devices, and the plurality of terminal devices include the first terminal device. In this case, the terminal device in step S830 may be a plurality of terminal devices in step S810. For another example, the terminal device that transmits the preamble may be the first terminal device. In this case, the terminal device in step S830 may be the first terminal device in step S810.

In step S840, the first terminal device receives first information transmitted by the target device, where the first information includes the terminal device identity received by the target device.

Correspondingly, in step S840, the target device transmits the first information to the terminal device from a perspective of the target device. The terminal device may be the first terminal device, or the terminal device includes another terminal device and the first terminal device.

In some implementations, the terminal device in step S840 may be the terminal device in step S830, or the terminal device in step S840 belongs to one of terminal devices in step S830. In some scenarios, it is assumed that preambles transmitted by a plurality of terminal devices are the same. In this case, in step S830, the plurality of terminal devices also transmit terminal device identities to the target device. Correspondingly, the target device may successfully receive only a terminal device identity of one of the terminal devices.

For ease of understanding, the following uses the first terminal device as an example for description. The terminal device identity of the first terminal device is the first-terminal device identity (or referred to as an identity of the first terminal device). An access procedure for another terminal device may be similar.

In some implementations, the first terminal device may determine, by comparing the terminal device identity carried in the first information with the first-terminal device identity, whether itself has successfully accessed the target device and contention resolves.

For example, if the terminal device identity in the first information is the same as the first-terminal device identity, contention resolution is successful and the first terminal device accesses the target device. For another example, if the terminal device identity in the first information is different from the first-terminal device identity, contention resolution fails for the first terminal device.

In some implementations, the first information may further include a first radio network temporary identifier (radio network temporary identifier, RNTI) associated with the terminal device identity received by the target device. Correspondingly, if the terminal device identity in the first information is the same as the first-terminal device identity (or if contention resolution is successful for the first terminal device), the first terminal device may reserve the first RNTI. In some scenarios, the first terminal device may communicate with the target device based on the first RNTI, that is, the first RNTI is used as the identity of the first terminal device.

In embodiments of this application, the first RNTI may be carried in only the first information. In this case, transmission of another message in the random access procedure may not be performed based on the RNTI. For example, the third information may not include the RNTI. For another example, the fourth information may not be processed by using the RNTI. Compared with the legacy random access procedure, the message2 carries the RNTI and the message3 is processed by using the RNTI. This helps simplify complexity of accessing the target device by the first terminal device, and reduces power consumption of accessing the target device by the first terminal device.

In addition, in embodiments of this application, the first terminal device and the network device may first perform random access based on the first-terminal device identity, and only the first RNTI is indicated only in the first information. Because a length of the first-terminal device identity is shorter than the first RNTI, this helps reduce power consumption of performing random access by the first terminal device.

In some scenarios, the first terminal device may access the target device because of to-be-transmitted information (for example, an ambient temperature collected by the first terminal device). If the to-be-transmitted information has already been transmitted to the network device in a process of accessing the target device by the first terminal device, the network device may no longer carry the first RNTI in the first information, so as to reduce overhead of transmitting the first information.

In some implementations, a length of the first RNTI is adjustable, or the first RNTI becomes longer. For example, a length of the first RNTI may be associated with a quantity of terminal devices served by the network device. That is, if a quantity of terminal devices served by the network device is relatively large, the length of the first RNTI may be relatively long, so as to easily identify a plurality of terminal devices. On the contrary, if a quantity of terminal devices served by the network device is relatively small, the length of the first RNTI may be relatively short, so as to reduce complexity of communication of the first terminal device based on the first RNTI.

It is assumed that the network device is located in an outdoor scenario. In this case, there may be tens of thousands of terminal devices served by the network device. In this case, the length of the first RNTI may require four bytes. It is assumed that the network device is in an indoor scenario. In this case, there may be only hundreds of terminal devices served by the network device. In this case, a length of the first RNTI may require only two bytes.

In embodiments of this application, no limitation is imposed on change of the length of the first RNTI. For example, the length of the first RNTI may be adjusted by using different coding schemes, or the network device may generate the first RNTI of different lengths by using different coding schemes. Certainly, in embodiments of this application, if change of the length the first RNTI may be implemented by means of truncation processing, that is, an original RNTI of a uniform length may be generated, then the original RNTI is truncated by using the truncation processing to obtain the first RNTI.

As described above, the length of the first RNTI is variable. Therefore, to reduce complexity of obtaining the first RNTI by the first terminal device, the network device may indicate the length of the first RNTI to the first terminal device. In some implementations, the target device may configure the length of the first RNTI for the first terminal device by using configuration information, that is, the target device may transmit configuration information to the first terminal device, where the configuration information is used to configure the length of the first RNTI for the first terminal device.

In some implementations, the first terminal device may receive the first information in a second time period, to improve a probability of successfully receiving the first information. A start location of the second time period may be determined based on a transmitting time of the first-terminal device identity (or a transmitting time of fourth information).

For example, the start location of the second time period is the transmitting time of the first-terminal device identity. That is to say, after the first terminal device transmits the first-terminal device identity, the first terminal device immediately enters the second time period to prepare to receive the first information. This helps the first terminal device receive energy from another communications device (for example, a reader) during the second time period for subsequent communication via backscatter radio waves.

For another example, the start location of the second time period is separated from the transmitting time of the first-terminal device identity by a second time interval. In other words, the start location of the second time period is obtained by offsetting a second time interval in a direction of time elapses from the transmitting time of the first-terminal device identity. That is, after transmitting the first-terminal device identity, the first terminal device will wait for the second time interval before entering the second time period to prepare for receiving the first information, which helps the first terminal device reduce power consumption.

In embodiments of this application, an implementation of the second time period is not limited. For example, the second time period may be represented by a time window. Certainly, the second time period may alternatively be represented by a timer.

In some implementations, in a case that the first information has not been received in the second time period, contention resolution fails for the first terminal device.

Generally, the first terminal device may support receiving a message within a bandwidth range or receiving a message within a channel. For a first terminal device that supports receiving a message within a channel, the first information may be a narrowband message transmitted on a channel, to reduce power consumption of receiving the first information by the first terminal device.

The foregoing describes first information in embodiments of this application, and the following describes third information used to carry the first index in embodiments of this application.

In some implementations, the third information includes one or more of the following: information for instructing the first terminal device to access a network based on a backoff mechanism; a parameter used by the first terminal device to access a network based on the backoff mechanism; or information for indicating a second time domain resource on which a terminal device transmits a terminal device identity.

For example, the third information includes the information for instructing the first terminal device to access the network based on the backoff mechanism, or the third information is used to indicate that the backoff mechanism is supported in a process of accessing the network by the first terminal device.

For example, the third information includes the parameter. In some implementations, the parameter is used to indicate a maximum quantity of attempts for the first terminal device to access the network. In some implementations, in a case that the first terminal device confirms that contention resolution has failed and a quantity of attempts for the first terminal device to access the target device is less than the maximum quantity of attempts, the first terminal device may re-monitor second information.

In some other implementations, in a case that the first terminal device confirms that contention resolution has failed and a quantity of attempts for the first terminal device to access the target device is greater than or equal to the maximum quantity of attempts, the first terminal device may confirm that access to the target device has failed.

In embodiments of this application, if the first terminal device confirms that access to the target device has failed, the first terminal device may no longer monitor the second information. Alternatively, the first terminal device may monitor the second information again after a relatively long time interval. This is not limited in embodiments of this application.

In some implementations, the first terminal device may set up a counter to record the maximum quantity of attempts for the first terminal device to access the network. Correspondingly, each time the first terminal device attempts to access the network, the counter increments by 1.

In some other implementations, the parameter is further used to indicate the backoff time information for the first terminal device to attempt to access the target device again, or the parameter is used to indicate time the first terminal device needs to wait before attempting to access the target device again. That is to say, a time interval between a time the first terminal device initiates a next random access procedure and a time the first terminal device initiates a current random access procedure is greater than or equal to backoff time indicated by the parameter. Alternatively, the first terminal device re-monitors the second information at a first instant, where the first instant is an instant obtained after duration that is indicated by the backoff time information and that starts from an instant at which the first terminal device confirms that contention resolution has failed.

In embodiments of this application, the parameter may be the backoff time. Certainly, in embodiments of this application, the parameter may be indication information used to indicate the backoff time. For example, the parameter may be an index used to indicate the backoff time, which helps reduce a quantity of bits occupied by indicating the backoff time.

For example, the third information includes information used to indicate the second time domain resource. In some implementations, the terminal device may transmit the terminal device identity on the second time domain resource. Alternatively, the information for indicating the second time domain resource (or the third information) may include one or more of the following: information for indicating a time domain offset between a receiving time of the third information and the second time domain resource; duration of each time domain resource in a plurality of time domain resources; or a time interval between two time domain resources that are adjacent to each other in time domain in the plurality of time domain resources.

In some implementations, the time domain offset between the time domain resource of the receiving time of the third information and the second time domain resource may be replaced with a time offset between the receiving time of the third information and a time corresponding to the second time domain resource.

In embodiments of this application, the time domain offset may include one of the following: a time domain offset between a start location of the time domain resource corresponding to the receiving time of the third information and a start location of the second time domain resource, a time domain offset between an end location of the time domain resource corresponding to the receiving time of the third information and an end location of the second time domain resource, a time domain offset between a start location of the time domain resource corresponding to the receiving time of the third information and an end location of the second time domain resource, or a time domain offset between an end location of the time domain resource corresponding to the receiving time of the third information and a start location of the second time domain resource.

In embodiments of this application, the time offset may include one of the following: a time domain offset between the receiving time of the third information and the start time of the second time domain resource, or a time domain offset between the receiving time of the third information and the end time of the second time domain resource.

In embodiments of this application, implementations of the time domain offset and/or the time offset are not limited. For example, the time domain offset and/or the time offset may be represented by a period of time. For another example, the time domain offset and/or the time offset may be represented by a quantity of time domain resources.

In some implementations, the plurality of time domain resources may be a plurality of time domain resources that may be used to transmit the terminal device identity, or the plurality of time domain resources are candidate time domain resources that are used to transmit the terminal device identity. The plurality of time domain resources include the second time domain resource.

In some implementations, a time interval between two time domain resources that are adjacent to each other in time domain in the plurality of time domain resources may be indicated by using a parameter t3. The parameter t3 may be duration between a start time domain location of a time domain resource in the plurality of time domain resources and a start time domain location of a next time domain resource. In this case, the first terminal device may determine the time interval based on duration corresponding to one time domain resource and the parameter t3. Certainly, in embodiments of this application, the time interval may alternatively be duration between an end time domain location of a time domain resource and a start time domain location of a next time domain resource.

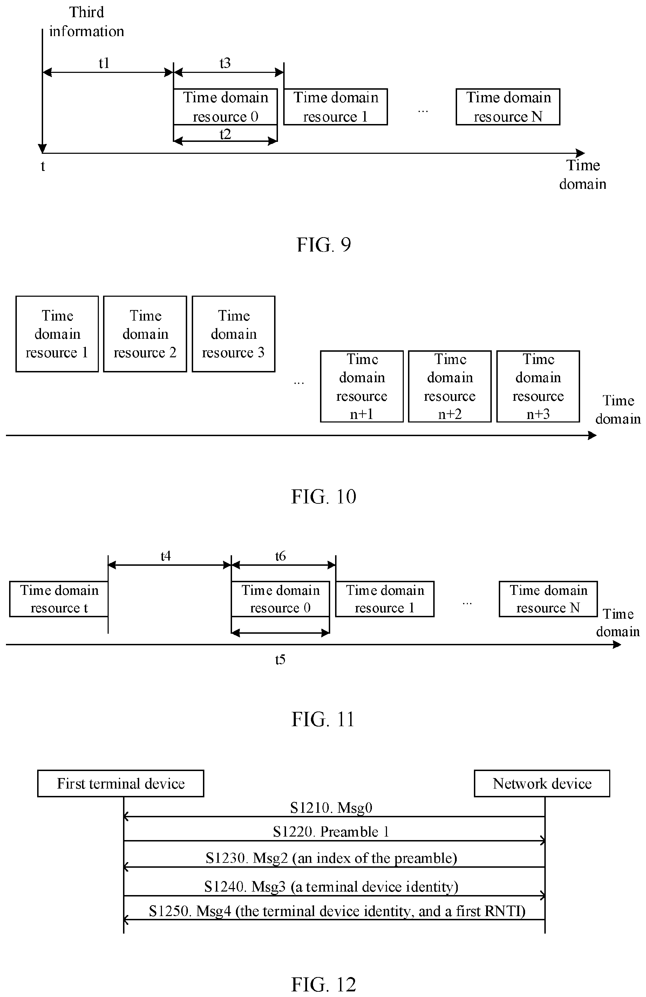

For ease of understanding, the following describes an indication manner of the second time domain resource in an embodiment of this application with reference to FIG. 9. Referring to FIG. 9, the plurality of time domain resources include time domain resources 0 to N, and a time at which the first terminal device receives the third information is t. Information used for indicating the second time domain resource and carried in the third information includes: information for indicating a time domain offset t1 between the receiving time of the third information and the second time domain resource, duration t2 corresponding to a respective time domain resource in the plurality of time domain resources, and duration t3 between a start location of the time domain resource 0 and a start location of the time domain resource 1. Correspondingly, the first terminal device may determine, based on the parameter in the third information, that the second time domain resource is the time domain resource 0.

In some scenarios, the network device may successfully receive and decode a plurality of preambles. In this case, the third information may carry a plurality of indexes to indicate the plurality of preambles received by the network device.

In some implementations, the third information is further used to indicate: information about time domain resources in which the plurality of preambles corresponding to the plurality of indexes are located; and/or information about a channel on which a preamble corresponding to a respective index in the plurality of indexes is located, which helps the first terminal device distinguish between preambles corresponding to the plurality of indexes. The plurality of indexes include the first index.

In some implementations, the information about channels on which the plurality of preambles are located may be used to identify information about a channel on which each preamble in the plurality of preambles is located. For example, the information may be an index of a channel on which each preamble in the plurality of preambles is located.

In some implementations, the information about the time domain resources in which the plurality of preambles are located may be used to identify a time domain resource in which each preamble in the plurality of preambles is located. For example, the information may be an index of the time domain resource in which each preamble in the plurality of preambles is located.

In some implementations, the indexes of the time domain resources in which the plurality of preambles are located may increase in a sequence from early to late in time domain. For example, the indexes of the time domain resources in which the plurality of preambles are located may increase sequentially in a sequence from early to late.

Generally, if the third information includes a plurality of indexes, it indicates that the target device receives preambles transmitted by a plurality of terminal devices. In this case, after determining that the plurality of indexes indicate that the preambles indicated by the plurality of indexes include preambles they transmitted, the plurality of terminal devices transmit respective terminal device identities to the target device. That is to say, the network device receives the terminal device identities of the plurality of terminal devices. To facilitate the network device in determining a correspondence between a received terminal device identity and a received preamble, the indexes of the time domain resources in which the plurality of preambles are located may be set to be in a one-to-one correspondence with time domain resources that carry the plurality of terminal device identities. In this case, the network device may determine, based on the correspondence and the time domain resources in which the terminal device identities are located, a specific preamble transmitted by a terminal device indicated by a terminal device identity.

In some implementations, the correspondence may include that the plurality of terminal device identities are carried on the plurality of time domain resources in a first sequence, and the first sequence is a sequence of indexes, in ascending order, of the time domain resources in which the plurality of preambles corresponding to the plurality of terminal device identities are located. That is to say, for a terminal device that transmits a preamble earlier, a terminal device identity corresponding to the terminal device is preferentially transmitted on the time domain resources in which the plurality of terminal device identities are located. Alternatively, a sequence in which the plurality of terminal devices transmit the preambles (that is, the plurality of preambles described above) on the plurality of time domain resources is the same as a sequence in which the plurality of terminal devices transmit the terminal device identities (that is, the plurality of terminal device identities described above) on the plurality of time domain resources.

Referring to FIG. 10, it is assumed that a terminal device 1 to a terminal device 3 separately transmit a preamble 1 to a preamble 3 to a network device. The terminal device 1 transmits the preamble 1 on a time domain resource 1, the terminal device 2 transmits the preamble 2 on a time domain resource 2, the terminal device 3 transmits the preamble 3 on a time domain resource 3, and a sequence of the three time domain resources from early to late in time domain is as follows: the time domain resource 1, the time domain resource 2, and the time domain resource 3. Correspondingly, the network device successfully receives the preamble 1 to the preamble 3 and transmits indexes corresponding to the preamble 1 to the preamble 3. In this case, the terminal device 1 may transmit a terminal device identity of the terminal device 1 on a time domain resource n+1, the terminal device 2 may transmit a terminal device identity of the terminal device 2 on a time domain resource n+2, and the terminal device 3 may transmit a terminal device identity of the terminal device 3 on a time domain resource n+3. A sequence of the time domain resources n+1 to n+3 from early to late in time domain is as follows: the time domain resource n+1, the time domain resource n+2, and the time domain resource n+3.

In some implementations, the third information may be transmitted in a broadcast manner, that is to say, a channel for transmitting the third information may be a broadcast channel. For example, the network device may transmit the third information in a broadcast manner in a bandwidth range, where the third information may include one or more indexes for indicating a plurality of preambles received by the target device.

In some implementations, the channel for transmitting the third information may be the same as a channel on which the first terminal device transmits the preamble, or the channel for transmitting the third information may be the same as the channel for transmitting the first-terminal device identity, which helps simplify complexity of receiving the third information by the first terminal device.

It should be noted that, if the channel for transmitting the third information is the same as the channel on which the first terminal device transmits the preamble, and the first terminal device selects a time domain resource for transmitting the preamble, then a time domain resource for transmitting the preamble indicated in the third information is selected by the first terminal device. In this case, the third information may not indicate information about the channel for transmitting the preamble, so as to reduce power consumption for transmitting the third information. Certainly, in embodiments of this application, if the foregoing problem is not considered, the third information may also indicate the information about the channel for transmitting the preamble.

In some implementations, the first terminal device may receive the third information in a first time period, to improve a probability of successfully receiving the third information. A start location of the first time period may be determined based on a transmitting time of the preamble.

For example, the start location of the first time period is the transmitting time of the preamble. In embodiments of this application, the start location of the first time period is set as the transmitting time of the preamble, that is, after the first terminal device transmits the preamble, the first terminal device immediately enters the first time period to prepare to receive the third information, so that the first terminal device can receive energy of another communications device (for example, a reader) in the first time period for subsequent communication via backscatter radio waves.

For another example, the start location of the first time period is separated from the transmitting time of the preamble by a first time interval. In other words, the start location of the first time period is obtained by offsetting a first time interval in a direction of time elapses from the transmitting time of the preamble. That is to say, after transmitting the preamble, the first terminal device will wait for the first time interval before entering the first time period to prepare to receive the third information, which helps the first terminal device reduce power consumption.

In embodiments of this application, an implementation of the first time period is not limited. For example, the first time period may be represented by a time window. Certainly, the first time period may further be identified by a timer.

In some implementations, in a case that the third information has not been received in the first time period, contention resolution fails for the first terminal device.

In a legacy random access procedure, the network device generally transmits trigger information in a periodic manner, to trigger the first terminal device to perform a random access procedure. However, this manner of periodically triggering a random access procedure is unnecessary, which may lead to reduced utilization of transmission resources. For example, for the Type A terminal device or the Type B terminal device described above, a working principle of the terminal device is performed based on backscattering. Therefore, before any process is initiated, a reader generally transmits one or more messages to the terminal device, so that the terminal device may perform backscattering based on the one or more messages transmitted by the reader. In this case, the one or more messages may implement the function of triggering a random access procedure. In this case, transmitting trigger information in a periodic manner is obviously resource-consuming for a system.

Therefore, in view of the foregoing problem, an embodiment of this application provides a wireless communication method. In this method, a target device may transmit second information to a first terminal device to trigger the first terminal device to perform a random access procedure, or the second information is used to trigger the first terminal device to transmit a preamble, where the second information may be transmitted aperiodically. Certainly, if the foregoing problem is not considered, the second information may be periodically transmitted.

For example, in a logistics transmission scenario, if a network device needs to inventory items in a warehouse, the network device may transmit second information to an electronic tag (as an example of the first terminal device) on the items. In this case, it may be understood that the second information is triggered based on a requirement of an inventory item in the warehouse.

In some implementations, the second information may be information broadcast in a bandwidth range, so that a plurality of terminal devices may receive the information.

In some implementations, a time domain resource (also referred to as a "reference time domain resource") for transmitting the second information may be used to determine a time domain resource (also referred to as a "first time domain resource") for transmitting the preamble. Alternatively, the first time domain resource is determined based on the reference time domain resource.

In some implementations, the first time domain resource is determined based on the reference time domain resource and a resource configuration parameter. The resource configuration parameter is used to indicate one or more of the following: a time domain offset between the reference time domain resource and the first time domain resource; duration of each time domain resource in a plurality of time domain resources; a time interval between two time domain resources that are adjacent to each other in time domain in the plurality of time domain resources; or a quantity of time domain resources in the plurality of time domain resources.

In some implementations, the time domain offset between the reference time domain resource and the first time domain resource may be replaced with a time offset between a time corresponding to the reference time domain resource and a time corresponding to the first time domain resource.

In embodiments of this application, the time domain offset may include one of the following: a time domain offset between a start location of the reference time domain resource and a start location of the first time domain resource, a time domain offset between an end location of the reference time domain resource and an end location of the first time domain resource, a time domain offset between a start location of the reference time domain resource and an end location of the first time domain resource, or a time domain offset between an end location of the reference time domain resource and a start location of the first time domain resource.

In embodiments of this application, the time offset may include one of the following: a time domain offset between a start time of the reference time domain resource and a start time of the first time domain resource, a time domain offset between the end time of the reference time domain resource and the end time of the first time domain resource, a time domain offset between the start time of the reference time domain resource and the end time of the first time domain resource, or a time domain offset between the end time of the reference time domain resource and the start time of the first time domain resource.

In embodiments of this application, implementations of the time domain offset and/or the time offset are not limited. For example, the time domain offset and/or the time offset may be represented by a period of time. For another example, the time domain offset and/or the time offset may be represented by a quantity of time domain resources.

In some implementations, the plurality of time domain resources may be a plurality of time domain resources available for transmitting the preamble, or in other words, the plurality of time domain resources are candidate time domain resources for transmitting the preamble. The plurality of time domain resources include the first time domain resource.

In some implementations, a time interval between two time domain resources that are adjacent to each other in time domain in the plurality of time domain resources may be indicated by using a parameter t6. The parameter t6 may be duration between a start time domain location of a time domain resource in the plurality of time domain resources and a start time domain location of a next time domain resource. In this case, the first terminal device may determine the time interval based on duration corresponding to one time domain resource and the parameter t6. Certainly, in embodiments of this application, the time interval may alternatively be duration between an end time domain location of a time domain resource and a start time domain location of a next time domain resource.

For ease of understanding, the following describes an indication manner of the first time domain resource in an embodiment of this application with reference to FIG. 11. Referring to FIG. 11, a plurality of time domain resources include time domain resources 0 to N, and the reference time domain resource is a time domain resource t. The resource configuration parameter includes: information for indicating a time domain offset t4 between the reference time domain resource and the first time domain resource, duration t5 corresponding to each time domain resource in the plurality of time domain resources, and a time interval t6 between a start location of the time domain resource 0 and a start location of the time domain resource 1. Correspondingly, the first terminal device may determine, based on the parameters in the resource configuration parameter, that the first time domain resource is the time domain resource 0.

In some implementations, the resource configuration parameter is carried in the second information. Certainly, in embodiments of this application, the resource configuration parameter may be predefined or pre-configured.

In some scenarios, to improve a success rate of accessing the target device by the first terminal device, the first terminal device may use different transmit powers each time the first terminal device attempts to access a network. In some implementations, in a process in which the first terminal device attempts to access the target device for a plurality of times, a transmit power used by the first terminal device may increase. For example, in a process in which the first terminal device attempts to access the target device for a plurality of times, the transmit power used by the first terminal device may be adjusted in power steps. For another example, in a process in which the first terminal device attempts to access the target device for a plurality of times, the transmit power used by the first terminal device may be obtained by adjusting in power steps based on an initial transmit power. For example, if the power step is ΔP, and the initial transmit power is P, the transmit power used when the first terminal device attempts to access the target device for the N^{th} time may be *P_{N}*, and *P_{N}* may be determined according to the following formula: *P_{N}* = P + N × ΔP.

In some implementations, the initial transmit power may be used when the first terminal device attempts to access the target device for the first time. In this case, N is a positive integer greater than or equal to 0. Certainly, in embodiments of this application, the transmit power used by the first terminal device to attempt to access the target device for the first time may be a sum of the initial transmit power and the power step. In this case, N is a positive integer greater than or equal to 1.

In embodiments of this application, the transmit power used by the first terminal device to attempt to access the target device may be a transmit power used for transmitting the preamble and/or fourth information (or a terminal device identity) in a process in which the first terminal device attempts to access the target device.

In some implementations, the parameter (for example, the initial transmit power and/or power step) for power adjustment may be configured by the network device by using the second information. Certainly, in embodiments of this application, the parameter (for example, the initial transmit power and/or power step) for power adjustment may be predefined or pre-configured.

In some implementations, in a process in which the first terminal device attempts to access the target device, information (for example, one or more of the second information, the third information, or the first information) transmitted by the network device to the first terminal device may be transmitted in a bandwidth range, or may be transmitted on a channel. Correspondingly, information (for example, the preamble and/or fourth information) transmitted by the first terminal device to the network device may be transmitted on a channel.

In some implementations, an occasion for the first terminal device to transmit information (for example, the preamble and/or fourth information) is associated with a terminal type of the first terminal device. For example, for the Type A terminal device and/or Type B terminal device, a time to start transmitting information may be determined based on internal preparation work and depending on whether external radio waves for backscattering exist. When both are ready, at least one of the Type A terminal device or Type B terminal device starts to transmit a message. For another example, for the Type C terminal device, a time to start transmitting information may be determined based on internal preparation work, that is, if the internal preparation work is completed, the Type C terminal device may transmit information.

It should be noted that a contention occurs when terminal devices on a same channel selects a same preamble. In this case, different terminal devices transmit the fourth information on a same channel at a substantially same time. In some cases, no fourth information transmitted by the plurality of terminal devices can be successfully demodulated by the network device (if transmit powers used when the plurality of terminal devices transmit the fourth information are similar, for the network device, the fourth information transmitted by the plurality of terminal devices may not be successfully demodulated). In this case, all the plurality of terminal devices fail to access the target device.

In some other cases, one piece of fourth information in the fourth information transmitted by the plurality of terminal devices may be successfully demodulated, and fourth information transmitted by remaining terminal devices cannot be successfully demodulated (If transmit powers used when the plurality of terminal devices transmit the fourth information are different from each other, for the network device, the fourth information transmitted by the network device at a maximum transmit power may be successfully demodulated.) In this case, a terminal device identity fed back by the network device in the first information is the terminal device identity in the fourth information successfully demodulated. The terminal devices corresponding to other fourth information that failed to be successfully demodulated will fail to access due to not receiving the first information.

For ease of understanding, the following describes a random access method in an embodiment of this application with reference to FIG. 12 to FIG. 15. In a random access procedure described below, Msg0 may be used as an example of the second information, Msg1 may be used as an example of information that carries the preamble, Msg2 may be used as an example of the third information, Msg3 may be used as an example of the fourth information, and Msg4 may be used as an example of the first information.

FIG. 12 is a schematic flowchart of a random access method according to an embodiment of this application. The method illustrated in FIG. 12 includes step S1210 to step S1250.

In step S1210, a network device transmits a Msg0.

In some implementations, for an inventory purpose, the network device may broadcast the Msg0 on a frequency band to trigger a plurality of terminal devices to perform random access, where the plurality of terminal devices include a first terminal device.

In step S1220, in response to that the Msg0 is received by the first terminal device, the first terminal device transmits a preamble 1 (also referred to as Msg1) to the network device.

In some implementations, one sequence may be modulated in the preamble 1, and the sequence may be one of 16 preset sequences.

In some implementations, each sequence in the 16 sequences may correspond to an index, so that the network device can demodulate preambles carrying different sequences. If the network device receives, from different terminal devices, preambles with a same sequence modulated, the network device cannot identify that the plurality of preambles are from different terminal devices. In this case, the network device may demodulate the plurality of preambles transmitted by the plurality of terminal devices as preambles transmitted by one terminal device.

In step S1230, the network device transmits a Msg2 to the first terminal device.

In some implementations, the Msg2 may include an index of a preamble received and correctly demodulated by the network device.

In step S1240, if indexes of preambles carried in the Msg2 include the index of the preamble 1, the first terminal device transmits a Msg3 to the network device.

In some implementations, the Msg3 includes a terminal device identity of the first terminal device, and the terminal device identity is a random number generated by the first terminal device.

In some implementations, after receiving the Msg2, the first terminal device determines whether the indexes of the preambles carried in the Msg2 include the index of the preamble 1. If the indexes of the preambles carried in the Msg2 include the index of the preamble 1, it indicates that the preamble 1 transmitted by the first terminal device is received and correctly demodulated by the network device, then the first terminal device transmits the Msg3 to the network device.

If the index of the preamble 1 is not included in the indexes of the preambles carried in the Msg2, it indicates that the preamble 1 transmitted by the first terminal device was not received and correctly demodulated by the network device, then the first terminal device may consider that random access fails.

In step S1250, the network device transmits a Msg4 to the first terminal device in response to that the terminal device identity is received by the network device.

In some implementations, the Msg4 includes the terminal device identity received by the network device and a first RNTI corresponding to the terminal device identity.

In some implementations, if terminal device identities carried in the Msg4 include the terminal device identity of the first terminal device, the first terminal device may consider that random access is successful. Subsequently, the first terminal device may use the first RNTI as its own identifier and communicate with the network device based on the first RNTI. If the terminal device identity of the first terminal device is not included in terminal device identities carried in the Msg4, the first terminal device may consider that random access fails.

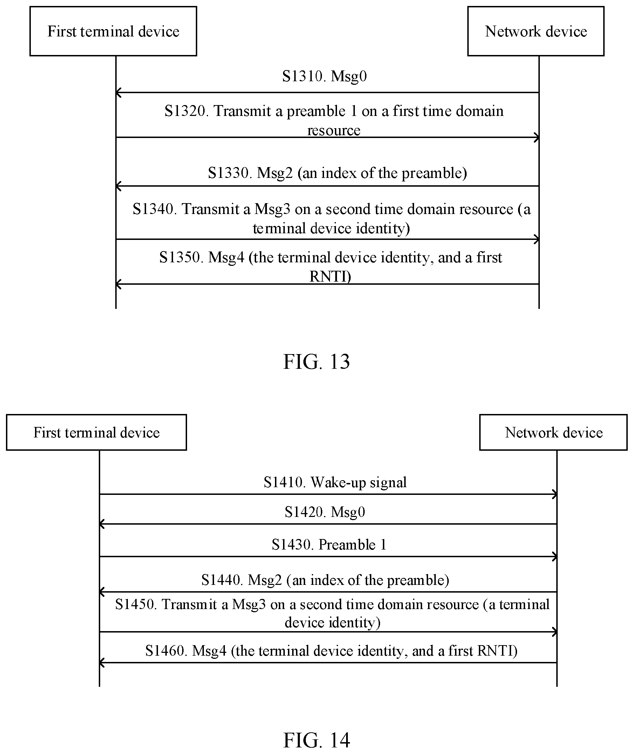

FIG. 13 is a schematic flowchart of a random access method according to another embodiment of this application. The method illustrated in FIG. 13 includes step S1310 to step S1350.

In step S1310, a network device transmits a Msg0.

In some implementations, for an inventory purpose, the network device may broadcast the Msg0 on a frequency band to trigger a plurality of terminal devices to perform random access, where the plurality of terminal devices include a first terminal device.

In some implementations, the Msg0 may include a resource configuration parameter used to determine a first time domain resource, and the first time domain resource may be used for transmitting a preamble 1. It should be understood that for a manner of determining the first time domain resource, refer to FIG. 11. For brevity, details are not described herein again.

In step S1320, in response to that the Msg0 is received by the first terminal device, the first terminal device transmits the preamble 1 (also referred to as Msg1) to the network device on the first time domain resource.

In some implementations, one sequence may be modulated in the preamble 1, and the sequence may be one of 16 preset sequences.

In some implementations, each sequence in the 16 sequences may correspond to an index, so that the network device can demodulate preambles carrying different sequences. If the network device receives, from different terminal devices, preambles with a same sequence modulated, the network device cannot identify that the plurality of preambles are from different terminal devices. In this case, the network device may demodulate the plurality of preambles transmitted by the plurality of terminal devices as preambles transmitted by one terminal device.

In step S1330, the network device transmits a Msg2 to the first terminal device.

In some implementations, the Msg2 may include an index of a preamble received and correctly demodulated by the network device, and an index of a time domain resource for transmitting the preamble.

In some implementations, if the Msg2 is transmitted by using a broadcast message, the Msg2 further needs to carry an index of a channel for transmitting the preamble.

In some implementations, the Msg2 may include a resource configuration parameter used for determining a second time domain resource, and the second time domain resource may be used for transmitting a Msg3. It should be understood that for a manner of determining the second time domain resource, refer to FIG. 9. For brevity, details are not described herein again.

In step S1340, if indexes of preambles carried in the Msg2 include an index of the preamble 1, the first terminal device transmits the Msg3 to the network device on the second time domain resource.

In some implementations, the Msg3 includes a terminal device identity of the first terminal device, and the terminal device identity is a random number generated by the first terminal device.

In some implementations, after receiving the Msg2, the first terminal device determines whether the indexes of the preambles carried in the Msg2 include the index of the preamble 1. If the indexes of the preambles carried in the Msg2 include the index of the preamble 1, it indicates that the preamble 1 transmitted by the first terminal device is received and correctly demodulated by the network device, then the first terminal device transmits the Msg3 to the network device.

If the index of the preamble 1 is not included in the indexes of the preambles carried in the Msg2, it indicates that the preamble 1 transmitted by the first terminal device was not received and correctly demodulated by the network device, then the first terminal device may consider that random access fails.

In step S1350, the network device transmits a Msg4 to the first terminal device in response to that the terminal device identity is received by the network device.

In some implementations, the Msg4 includes the terminal device identity received by the network device and a first RNTI corresponding to the terminal device identity.

In some implementations, if terminal device identities carried in the Msg4 include the terminal device identity of the first terminal device, the first terminal device may consider that random access is successful. Subsequently, the first terminal device may use the first RNTI as its own identifier and communicate with the network device based on the first RNTI. If the terminal device identity of the first terminal device is not included in terminal device identities carried in the Msg4, the first terminal device may consider that random access fails.

FIG. 14 is a schematic flowchart of a random access method according to another embodiment of this application. It is assumed that the first terminal device is the Type C terminal device described above, and the terminal device of this type may independently select a channel to transmit information. In some scenarios, a first terminal device of this type may work on an FDD frequency band. The method illustrated in FIG. 14 includes step S1410 to step S1460.

In step S1410, the first terminal device transmits a wake-up signal to a network device to wake up the network device.

In some implementations, if the network device requires the first terminal device to actively transmit information (if the first terminal device is a temperature detection sensor, the information actively transmitted by the first terminal device includes temperature information), because the network device does not know a time at which the first terminal device initiates a random access procedure, the network device generally triggers, by periodically broadcasting a Msg0, the first terminal device to perform random access. However, periodically broadcasting the Msg0 consumes system energy and bandwidth In this case, if no terminal device needs to initiate a random access procedure, the network device may stop broadcasting the Msg0. If a terminal device needs to initiate a random access procedure but detects no Msg0, the first terminal device may transmit a wake-up signal to the network device, to trigger the network device to transmit the Msg0.

In step S1420, the network device transmits the Msg0 in response to the wake-up signal.

In some implementations, the network device may broadcast the Msg0 on a frequency band to trigger a plurality of terminal devices to perform random access, where the plurality of terminal devices include the first terminal device.

In step S1430, in response to that the Msg0 is received by the first terminal device, the first terminal device transmits a preamble 1 (also referred to as Msg1) to the network device.

In some implementations, a transmission resource for transmitting the preamble 1 by the first terminal device may be independently selected by the first terminal device. The transmission resource may include one or more of the following: a time domain resource, a frequency domain resource, or a spatial domain resource.

In some implementations, one sequence may be modulated in the preamble 1, and the sequence may be one of 16 preset sequences.

In some implementations, each sequence in the 16 sequences may correspond to an index, so that the network device can demodulate preambles carrying different sequences. If the network device receives, from different terminal devices, preambles with a same sequence modulated, the network device cannot identify that the plurality of preambles are from different terminal devices. In this case, the network device may demodulate the plurality of preambles transmitted by the plurality of terminal devices as preambles transmitted by one terminal device.

In step S1440, the network device transmits a Msg2 to the first terminal device.

In some implementations, the Msg2 may include one or more of the following: an index of a preamble received and correctly demodulated by the network device, an index of a time domain resource for transmitting the preamble, an index of a channel for transmitting the preamble, or a timing advance (timing advance, TA) value for uplink synchronization.

In some implementations, because coverage of the network device may be large (for example, the coverage exceeds 500 meters), the Msg2 may include a TA value to facilitate time synchronization between the network device and the terminal device.

In some implementations, the Msg2 may include a resource configuration parameter used for determining a second time domain resource, and the second time domain resource may be used for transmitting a Msg3. It should be understood that for a manner of determining the second time domain resource, refer to FIG. 9. For brevity, details are not described herein again. Certainly, in embodiments of this application, the Msg2 may further include a frequency domain resource for transmitting the Msg3.

In some scenarios, the network device may successfully receive and demodulate a plurality of preambles. In this case, the Msg2 includes indexes of the plurality of preambles. In this case, each index of the plurality of preambles may correspond to a group of foregoing parameters: an index of a preamble received and correctly demodulated by the network device, an index of a time domain resource for transmitting the preamble, an index of a channel for transmitting the preamble, or a TA value for uplink synchronization, a resource configuration parameter for determining the second time domain resource, or a frequency domain resource for transmitting the Msg3.

In step S1450, if indexes of preambles carried in the Msg2 include the index of the preamble 1, the first terminal device transmits the Msg3 to the network device.

In some implementations, a transmission resource for transmitting the Msg3 by the first terminal device may be determined based on the Msg2, or the first terminal device transmits the Msg3 on a transmission resource indicated by the Msg2.

In some implementations, the Msg3 includes a terminal device identity of the first terminal device, and the terminal device identity is a random number generated by the first terminal device.

In some implementations, after receiving the Msg2, the first terminal device determines whether the indexes of the preambles carried in the Msg2 include the index of the preamble 1. If the indexes of the preambles carried in the Msg2 include the index of the preamble 1, it indicates that the preamble 1 transmitted by the first terminal device is received and correctly demodulated by the network device, then the first terminal device transmits the Msg3 to the network device.

If the index of the preamble 1 is not included in the indexes of the preambles carried in the Msg2, it indicates that the preamble 1 transmitted by the first terminal device was not received and correctly demodulated by the network device, then the first terminal device may consider that random access fails.

In step S1460, the network device transmits a Msg4 to the first terminal device in response to that the terminal device identity is received by the network device.

In some implementations, the Msg4 includes the terminal device identity received by the network device and a first RNTI corresponding to the terminal device identity.

In some implementations, if terminal device identities carried in the Msg4 include the terminal device identity of the first terminal device, the first terminal device may consider that random access is successful. Subsequently, the first terminal device may use the first RNTI as its own identifier and communicate with the network device based on the first RNTI. If the terminal device identity of the first terminal device is not included in terminal device identities carried in the Msg4, the first terminal device may consider that random access fails.

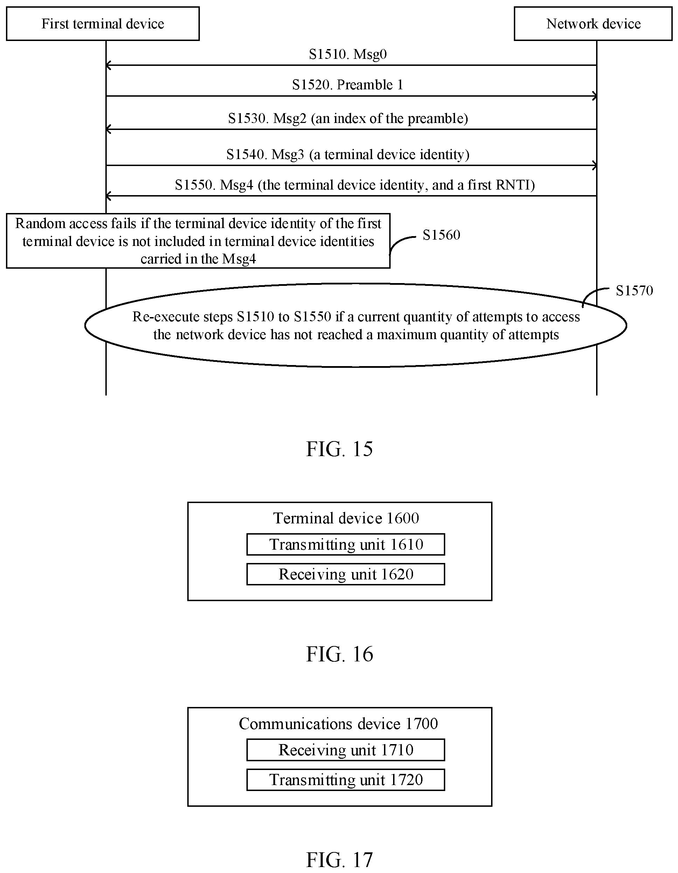

FIG. 15 is a schematic flowchart of a random access method according to another embodiment of this application. The method illustrated in FIG. 15 includes step S1510 to step S1570.

In step S1510, a network device transmits a Msg0.

In some implementations, the network device may broadcast the Msg0 on a frequency band to trigger a plurality of terminal devices to perform random access, where the plurality of terminal devices include the first terminal device.

In step S1520, in response to that the Msg0 is received by the first terminal device, the first terminal device transmits a preamble 1 (also referred to as Msg1) to the network device.

In some implementations, a transmission resource for transmitting the preamble 1 by the first terminal device may be independently selected by the first terminal device. The transmission resource may include one or more of the following: a time domain resource, a frequency domain resource, or a spatial domain resource.

In some implementations, one sequence may be modulated in the preamble 1, and the sequence may be one of 16 preset sequences.

In some implementations, each sequence in the 16 sequences may correspond to an index, so that the network device can demodulate preambles carrying different sequences. If the network device receives, from different terminal devices, preambles with a same sequence modulated, the network device cannot identify that the plurality of preambles are from different terminal devices. In this case, the network device may demodulate the plurality of preambles transmitted by the plurality of terminal devices as preambles transmitted by one terminal device.

In step S1530, the network device transmits a Msg2 to the first terminal device.

In some implementations, the Msg2 may include one or more of the following: an index of a preamble received and correctly demodulated by the network device, an index of a time domain resource for transmitting the preamble, an index of a channel for transmitting the preamble, or a timing advance (timing advance, TA) value for uplink synchronization.

In some implementations, because coverage of the network device may be large (for example, the coverage exceeds 500 meters), the Msg2 may include a TA value to facilitate time synchronization between the network device and the terminal device.

In some implementations, the Msg2 may include a resource configuration parameter used for determining a second time domain resource, and the second time domain resource may be used for transmitting a Msg3. It should be understood that for a manner of determining the second time domain resource, refer to FIG. 9. For brevity, details are not described herein again. Certainly, in embodiments of this application, the Msg2 may further include a frequency domain resource for transmitting the Msg3.

In some implementations, the Msg2 may include: information for instructing the first terminal device to access a network based on a backoff mechanism, or a parameter used by the first terminal device to access a network based on a backoff mechanism (for example, a maximum quantity of attempts for the first terminal device to access a target device).

In some scenarios, the network device may successfully receive and demodulate a plurality of preambles. In this case, the Msg2 includes indexes of the plurality of preambles. In this case, each index of the plurality of preambles may correspond to a group of foregoing parameters: an index of a preamble received and correctly demodulated by the network device, an index of a time domain resource for transmitting the preamble, an index of a channel for transmitting the preamble, a TA value for uplink synchronization, a resource configuration parameter for determining the second time domain resource, a frequency domain resource for transmitting the Msg3, information for instructing the first terminal device to access a network based on a backoff mechanism, or a parameter used by the first terminal device to access a network based on a backoff mechanism.

In step S1540, if indexes of preambles carried in the Msg2 include the index of the preamble 1, the first terminal device transmits the Msg3 to the network device.

In some implementations, a transmission resource for transmitting the Msg3 by the first terminal device may be determined based on the Msg2, or the first terminal device transmits the Msg3 on a transmission resource indicated by the Msg2.

In some implementations, the Msg3 includes a terminal device identity of the first terminal device, and the terminal device identity is a random number generated by the first terminal device.

In some implementations, after receiving the Msg2, the first terminal device determines whether the indexes of the preambles carried in the Msg2 include the index of the preamble 1. If the indexes of the preambles carried in the Msg2 include the index of the preamble 1, it indicates that the preamble 1 transmitted by the first terminal device is received and correctly demodulated by the network device, then the first terminal device transmits the Msg3 to the network device.

If the index of the preamble 1 is not included in the indexes of the preambles carried in the Msg2, it indicates that the preamble 1 transmitted by the first terminal device was not received and correctly demodulated by the network device, then the first terminal device may consider that random access fails.

In step S1550, the network device transmits a Msg4 in response to that the terminal device identity is received by the network device.

In some implementations, the Msg4 includes the terminal device identity received by the network device and a first RNTI corresponding to the terminal device identity.

In some implementations, if terminal device identities carried in the Msg4 include the terminal device identity of the first terminal device, the first terminal device may consider that random access is successful. Subsequently, the first terminal device may use the first RNTI as its own identifier and communicate with the network device based on the first RNTI. If the terminal device identity of the first terminal device is not included in terminal device identities carried in the Msg4, the first terminal device may consider that random access fails.

In step S1560, if the terminal device identity of the first terminal device is not included in terminal device identities carried in the Msg4, the first terminal device may consider that random access fails.

In step S1570, if a current quantity of attempts for the first terminal device to access the target device has not reached a maximum quantity of attempts, the first terminal device may continue to attempt to access the target device, that is, re-execute step S1510 to step S1550.

In some implementations, if step S1510 to step S1550 are re-executed, a transmission resource for transmitting the preamble and the fourth information by the first terminal device may be independently selected by the first terminal device.

In some implementations, if re-executing steps S1510 to S1550 is the N^{th} attempt for the first terminal device to access the target device, and Msg0 carries a parameter for adjusting a transmit power, for example, a power step is ΔP and an initial transmit power is P, then a transmit power used when the first terminal device attempts to access the target device for the N^{th} time may be *P_{N}*, and *P_{N}* may be determined according to the following formula: *P_{N}* = P + N × ΔP.

It should be noted that the transmit power *P_{N}* may be used for transmitting the preamble and/or the Msg3 in a process in which the first terminal device attempts to access the target device for the N^{th} time.

It should be noted that, the foregoing describes a solution in which the first terminal device attempts to access the target device again by using an example in which the terminal device identity of the first terminal device is not included in the terminal device identities carried in the Msg4. In some scenarios, in step 1540, if the index of the preamble 1 is not included in the indexes of the preambles carried in the Msg2, the first terminal device attempts to access the target device again after the first terminal device fails to access the target device. In this case, a manner in which the first terminal device attempts to access the target device again is similar to the solution described in step S1570. For details, refer to the foregoing description. For brevity, details are not described again.

In embodiments of this application, a time domain resource is not limited. For example, the time domain resource may be a slot, a subframe, a mini-subframe, a symbol, or the like. Certainly, in embodiments of this application, the time domain resource may be another newly introduced time domain resource in a future communications system.

In addition, in embodiments of this application, terms such as "access network", "access network device", "access target device", and "random access" may be used interchangeably.

The method embodiments of this application are described above in detail with reference to FIG. 1 to FIG. 15. Apparatus embodiments of this application are described below in detail with reference to FIG. 16 to FIG. 18. It should be understood that the descriptions of the method embodiments correspond to descriptions of the apparatus embodiments, and therefore, for parts that are not described in detail, reference may be made to the foregoing method embodiments.

FIG. 16 is a schematic diagram of a terminal device according to an embodiment of this application. The terminal device 1600 in FIG. 16 is a first terminal device, and includes a transmitting unit 1610 and a receiving unit 1620.

The transmitting unit 1610 is configured to transmit a preamble to a target device.

The receiving unit 1620 is configured to receive a first index transmitted by the target device, where the first index is used to indicate a preamble received by the target device.

The transmitting unit 1610 is configured to: transmit a first-terminal device identity to the target device in response to that the first index is the same as an index of the preamble.

The receiving unit 1620 is configured to receive first information transmitted by the target device, where the first information includes a terminal device identity received by the target device. The target device includes a network device and/or a second terminal device.

In some implementations, the terminal device includes: a first processing unit, configured to confirm that contention resolution is successful in a case that the terminal device identity in the first information matches the first-terminal device identity; and/or a second processing unit, configured to confirm that contention resolution has failed in a case that the terminal device identity in the first information does not match the first-terminal device identity.

In some implementations, the first information further includes a first radio network temporary identifier RNTI associated with the terminal device identity.

In some implementations, the receiving unit is further configured to receive configuration information transmitted by the target device, where the configuration information is used to configure a length of the first RNTI for the first terminal device.

In some implementations, the terminal device further includes:
a third processing unit, configured to: reserve a first RNTI associated with the first-terminal device identity in a case that the first terminal device confirms that contention resolution is successful.

In some implementations, the first-terminal device identity is generated by the first terminal device.

In some implementations, the receiving unit is further configured to receive second information transmitted by the target device, where the second information is used to instruct the first terminal device to transmit the preamble, and the second information is information transmitted aperiodically, or the second information is information transmitted periodically.

In some implementations, a first time domain resource for transmitting the preamble is determined based on a reference time domain resource, and the reference time domain resource is used to receive the second information.

In some implementations, the first time domain resource is determined based on the reference time domain resource and a resource configuration parameter, and the resource configuration parameter is used to indicate one or more of the following: a time domain offset between the reference time domain resource and the first time domain resource; duration of each time domain resource in a plurality of time domain resources, where the plurality of time domain resources include the first time domain resource; a time interval between two time domain resources that are adjacent to each other in time domain in the plurality of time domain resources; or a quantity of time domain resources in the plurality of time domain resources.

In some implementations, the resource configuration parameter is carried in the second information.

In some implementations, the second information includes a power adjustment parameter, and the power adjustment parameter is used to adjust a transmit power of the preamble and/or a transmit power of the first-terminal device identity.

In some implementations, a time domain resource for transmitting the first-terminal device identity may be randomly selected by the first terminal device.

In some implementations, the first index is carried in third information, and the third information includes one or more of the following: information for instructing the first terminal device to access a network based on a backoff mechanism; a parameter used by the first terminal device to access a network based on the backoff mechanism; or information for indicating a second time domain resource for transmitting the first-terminal device identity.

In some implementations, in a case that the third information includes the parameter, the parameter is used to indicate: a maximum quantity of attempts for the first terminal device to access the target device; and/or backoff time information for the first terminal device to attempt to access the target device again.

In some implementations, if the parameter is used to indicate the maximum quantity of attempts, the receiving unit is further configured to: re-monitor the second information in a case that the first terminal device confirms that contention resolution has failed and a quantity of attempts for the first terminal device to access the target device is less than the maximum quantity of attempts.

In some implementations, if the parameter is used to indicate the maximum quantity of attempts, the terminal device further includes a fourth processing unit, further configured to: confirm that access to the target device has failed in a case that the first terminal device confirms that contention resolution has failed and a quantity of attempts for the first terminal device to access the target device is greater than or equal to the maximum quantity of attempts.

In some implementations, if the parameter is used to indicate the backoff time information, the receiving unit is configured to re-monitor the second information at a first instant, where the first instant is an instant obtained after duration that is indicated by the backoff time information and that starts from an instant at which the first terminal device confirms that contention resolution has failed.

In some implementations, in a case that the third information is used for indicating the second time domain resource for transmitting the terminal device identity, the third information includes one or more of the following: information for indicating a time domain offset between a time domain resource corresponding to a receiving time of the third information and the second time domain resource; duration of each time domain resource in a plurality of time domain resources, where the plurality of time domain resources include the second time domain resource; or a time interval between two time domain resources that are adjacent to each other in time domain in the plurality of time domain resources.

In some implementations, in a case that the third information carries a plurality of indexes, the plurality of indexes are used to indicate a plurality of preambles received by the target device, the plurality of indexes include the first index, and the third information is used to indicate: information about time domain resources in which the plurality of preambles corresponding to the plurality of indexes are located; and/or information about channels on which the plurality of preambles corresponding to the plurality of indexes are located.

In some implementations, the information about the time domain resources in which the plurality of preambles are located includes indexes of the time domain resources in which the plurality of preambles are located, and the indexes of the time domain resources in which the plurality of preambles are located increase in a sequence from early to late in time domain.

In some implementations, the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

In some implementations, a sequence in which the plurality of terminal devices transmit preambles on a plurality of time domain resources is the same as a sequence in which the plurality of terminal devices transmit terminal device identities on a plurality of time domain resources.

In some implementations, a channel for transmitting the third information is a broadcast channel.

In some implementations, the first terminal device receives the third information in a first time period, and a start location of the first time period is determined based on a transmitting time of the preamble.

In some implementations, the start location of the first time period is the transmitting time of the preamble; or the start location of the first time period is separated from the transmitting time of the preamble by a first time interval.

In some implementations, the terminal device further includes: a fifth processing unit, configured to: confirm that contention resolution has failed in a case that the third information has not been received in the first time period.

In some implementations, the first terminal device receives the first information in a second time period, and a start location of the second time period is determined based on a transmitting time of the first-terminal device identity.

In some implementations, the start location of the second time period is the transmitting time of the first-terminal device identity; or the start location of the second time period is separated from the transmitting time of the first-terminal device identity by a second time interval.

In some implementations, the terminal device further includes: a sixth processing unit, configured to: confirm that contention resolution has failed in a case that the first information has not been received in the second time period.

In some implementations, a channel for transmitting the preamble is the same as a channel for transmitting the first-terminal device identity.

FIG. 17 is a schematic diagram of a communications device according to an embodiment of this application. A communications device 1700 shown in FIG. 17 is a target device, and the communications device 1700 includes a receiving unit 1710 and a transmitting unit 1720.

The receiving unit 1710 is configured to receive a preamble transmitted by a first terminal device.

The transmitting unit 1720 is configured to transmit a first index to the first terminal device, where the first index is used to indicate a preamble received by the target device.

The receiving unit 1710 is configured to receive a terminal device identity transmitted by a terminal device.

The transmitting unit 1720 is configured to transmit first information to the terminal device, where the first information includes a terminal device identity received by the target device. The target device includes a network device and/or a second terminal device.

In some implementations, the terminal device includes the first terminal device, and the first terminal device corresponds to a first-terminal device identity. In a case that the terminal device identity in the first information matches the first-terminal device identity, contention resolution is successful for the first terminal device; and/or in a case that the terminal device identity in the first information does not match the first-terminal device identity, contention resolution fails for the first terminal device.

In some implementations, the first information further includes a first radio network temporary identifier RNTI associated with the terminal device identity.

In some implementations, in a case that contention resolution is successful for the first terminal device, the target device communicates with the first terminal device based on the first RNTI.

In some implementations, the transmitting unit is configured to transmit configuration information to the first terminal device, where the configuration information is used to configure a length of the first RNTI for the first terminal device.

In some implementations, the first terminal device corresponds to a first-terminal device identity, and the first-terminal device identity is generated by the first terminal device.

In some implementations, the transmitting unit is configured to transmit second information to the first terminal device, the second information is used to instruct the first terminal device to transmit the preamble, and the second information is information transmitted aperiodically, or the second information is information transmitted periodically.

In some implementations, a first time domain resource for transmitting the preamble is determined based on a reference time domain resource, and the reference time domain resource is used to receive the second information.

In some implementations, the first time domain resource is determined based on the reference time domain resource and a resource configuration parameter, and the resource configuration parameter is used to indicate one or more of following: a time domain offset between the reference time domain resource and the first time domain resource; duration of each time domain resource in a plurality of time domain resources, where the plurality of time domain resources include the first time domain resource; a time interval between two time domain resources that are adjacent to each other in time domain in the plurality of time domain resources; or a quantity of time domain resources in the plurality of time domain resources.

In some implementations, the resource configuration parameter is carried in the second information.

In some implementations, the second information includes a power adjustment parameter, and the power adjustment parameter is used to adjust a transmit power of the preamble and/or a transmit power of the first-terminal device identity. The terminal device corresponding to the terminal device identity includes the first terminal device.

In some implementations, a time domain resource for transmitting the first-terminal device identity may be randomly selected by the first terminal device.

In some implementations, the first index is carried in third information, and the third information includes one or more of the following: information for instructing the terminal device to access the target device based on a backoff mechanism; a parameter used by the terminal device to access the target device based on the backoff mechanism; or information for indicating a second time domain resource in which the terminal device transmits the terminal device identity corresponding to the terminal device.

In some implementations, in a case that the third information includes the parameter, the parameter is used to indicate: a maximum quantity of attempts for the terminal device to access the target device; and/or backoff time information for the terminal device to attempt to access the target device again.

In some implementations, if the parameter is used to indicate the maximum quantity of attempts, then in a case that contention resolution fails for the first terminal device and a quantity of attempts for the first terminal device to access the target device is greater than or equal to the maximum quantity of attempts, the first terminal device fails to access the target device.

In some implementations, in a case that the parameter is used to indicate the backoff time information, a first instant is an instant at which the first terminal device re-monitors the second information, and the first instant is an instant obtained after duration that is indicated by the backoff time information and that starts from an instant at which the first terminal device confirms that contention resolution has failed.

In some implementations, in a case that the third information is used for indicating the second time domain resource for transmitting the terminal device identity, the third information includes one or more of the following: information for indicating a time domain offset between a time domain resource corresponding to a receiving time of the third information and the second time domain resource; duration of each time domain resource in a plurality of time domain resources, where the plurality of time domain resources include the second time domain resource; or a time interval between two time domain resources that are adjacent to each other in time domain in the plurality of time domain resources.

In some implementations, in a case that the third information carries a plurality of indexes, the plurality of indexes are used to indicate a plurality of preambles received by the target device, the plurality of indexes include the first index, and the third information is used to indicate: information about time domain resources in which the plurality of preambles corresponding to the plurality of indexes are located; and/or information about channels on which the plurality of preambles corresponding to the plurality of indexes are located.

In some implementations, the information about the time domain resources in which the plurality of preambles are located includes indexes of the time domain resources in which the plurality of preambles are located, and the indexes of the time domain resources in which the plurality of preambles are located increase in a sequence from early to late in time domain.

In some implementations, the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

In some implementations, a sequence in which the plurality of terminal devices transmit preambles on a plurality of time domain resources is the same as a sequence in which the plurality of terminal devices transmit terminal device identities on a plurality of time domain resources.

In some implementations, a channel for transmitting the third information is a broadcast channel.

In some implementations, the first terminal device receives the third information in a first time period, and a start location of the first time period is determined based on a transmitting time of the preamble.

In some implementations, the start location of the first time period is the transmitting time of the preamble; or the start location of the first time period is separated from the transmitting time of the preamble by a first time interval.

In some implementations, in a case that the third information has not been received in the first time period, contention resolution fails for the first terminal device.

In some implementations, the terminal device is the first terminal device, the first terminal device corresponds to a first-terminal device identity, the first terminal device receives the first information in a second time period, and a start location of the second time period is determined based on a transmitting time of the first-terminal device identity.

In some implementations, the start location of the second time period is the transmitting time of the first-terminal device identity; or the start location of the second time period is separated from the transmitting time of the first-terminal device identity by a second time interval.

In some implementations, in a case that the first information has not been received in the second time period, contention resolution fails for the first terminal device.

In some implementations, the terminal device is the first terminal device, the first terminal device corresponds to a first-terminal device identity, and a channel for transmitting the preamble is the same as a channel for transmitting the first-terminal device identity.

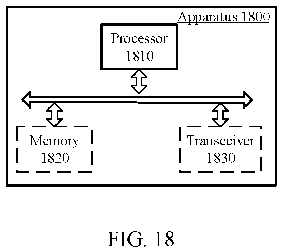

In an optional embodiment, the transmitting unit 1610 and the receiving unit 1620 may be serve as a transceiver 1830. The terminal device 1600 may further include a processor 1810 and a memory 1820, as shown in FIG. 18.

In an optional embodiment, the transmitting unit 1710 and the receiving unit 1720 may be serve as a transceiver 1830. The communications device 1700 may further include the processor 1810 and the memory 1820, which are specifically shown in FIG. 18.

FIG. 18 is a schematic diagram of a structure of a communications apparatus according to an embodiment of this application. Dashed lines in FIG. 18 indicate that a unit or module is optional. The apparatus 1800 may be configured to implement the methods described in the foregoing method embodiments. The apparatus 1800 may be a chip, a terminal device, or a network device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, where the program may be executed by the processor 1810, to cause the processor 1810 to execute the methods described in the method embodiments. The memory 1820 may be separated from or integrated into the processor 1810.

The apparatus 1800 may further include a transceiver 1830. The processor 1810 may communicate with another device or chip by using the transceiver 1830. For example, the processor 1810 may transmit data to and receive data from another device or chip through the transceiver 1830.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first terminal device, a preamble to a target device;
receiving, by the first terminal device, a first index transmitted by the target device, wherein the first index is used to indicate a preamble received by the target device;
in response to that the first index is the same as an index of the preamble, transmitting, by the first terminal device, a first-terminal device identity to the target device; and
receiving, by the first terminal device, first information transmitted by the target device, wherein the first information comprises a terminal device identity received by the target device,
wherein the target device comprises a network device and/or a second terminal device.

2. The method according to claim 1, wherein the method further comprises:
in a case that the terminal device identity in the first information matches the first-terminal device identity, confirming, by the first terminal device, that contention resolution is successful; and/or
in a case that the terminal device identity in the first information does not match the first-terminal device identity, confirming, by the first terminal device, that contention resolution fails.

3. The method according to claim 1 or 2, wherein the first information further comprises a first radio network temporary identifier RNTI associated with the terminal device identity.

4. The method according to claim 3, wherein the method further comprises:
in a case that the first terminal device confirms that contention resolution is successful, reserving, by the first terminal device, a first radio network temporary identifier RNTI associated with the first-terminal device identity.

5. The method according to claim 3 or 4, wherein the method further comprises:
receiving, by the first terminal device, configuration information transmitted by the target device, wherein the configuration information is used to configure a length of the first RNTI for the first terminal device.

6. The method according to any one of claims 1 to 5, wherein the first-terminal device identity is generated by the first terminal device.

7. The method according to any one of claims 1 to 6, wherein the method further comprises:
receiving, by the first terminal device, second information transmitted by the target device, wherein the second information is used to instruct the first terminal device to transmit the preamble, and the second information is information transmitted aperiodically, or the second information is information transmitted periodically.

8. The method according to claim 7, wherein a first time domain resource for transmitting the preamble is determined based on a reference time domain resource, and the reference time domain resource is used to receive the second information.

9. The method according to claim 8, wherein the first time domain resource is determined based on the reference time domain resource and a resource configuration parameter, and the resource configuration parameter is used to indicate one or more of following:
a time domain offset between the reference time domain resource and the first time domain resource;
duration of each time domain resource in a plurality of time domain resources, wherein the plurality of time domain resources comprise the first time domain resource;
a time interval between two time domain resources that are adjacent to each other in time domain in the plurality of time domain resources; or
a quantity of time domain resources in the plurality of time domain resources.

10. The method according to claim 9, wherein the resource configuration parameter is carried in the second information.

11. The method according to any one of claims 7 to 10, wherein the second information comprises a power adjustment parameter, and the power adjustment parameter is used to adjust a transmit power of the preamble and/or a transmit power of the first-terminal device identity.

12. The method according to any one of claims 1 to 7, wherein a time domain resource for transmitting the first-terminal device identity is randomly selected by the first terminal device.

13. The method according to any one of claims 1 to 12, wherein the first index is carried in third information, and the third information comprises one or more of following:
information for instructing the first terminal device to access a network based on a backoff mechanism;
a parameter used by the first terminal device to access a network based on the backoff mechanism; or
information for indicating a second time domain resource for transmitting the first-terminal device identity.

14. The method according to claim 13, wherein in a case that the third information comprises the parameter, the parameter is used to indicate: a maximum quantity of attempts for the first terminal device to access the target device; and/or
backoff time information for the first terminal device to attempt to access the target device again.

15. The method according to claim 14, wherein in a case that the parameter is used to indicate the maximum quantity of attempts, the method further comprises:
remonitoring, by the first terminal device, the second information in a case that the first terminal device confirms that contention resolution has failed and a quantity of attempts for the first terminal device to access the target device is less than the maximum quantity of attempts.

16. The method according to claim 14 or 15, wherein in a case that the parameter is used to indicate the maximum quantity of attempts, the method further comprises:
in a case that the first terminal device confirms that contention resolution has failed and a quantity of attempts for the first terminal device to access the target device is greater than or equal to the maximum quantity of attempts, confirming, by the first terminal device, that access to the target device has failed.

17. The method according to claim 14, wherein in a case that the parameter is used to indicate the backoff time information, the method further comprises:
remonitoring, by the first terminal device, the second information at a first instant, wherein the first instant is an instant obtained after duration that is indicated by the backoff time information and that starts from an instant at which the first terminal device confirms that contention resolution has failed.

18. The method according to any one of claims 13 to 17, wherein in a case that the third information is used for indicating the second time domain resource for transmitting the first-terminal device identity, the third information comprises one or more of following:
information for indicating a time domain offset between a time domain resource corresponding to a receiving time of the third information and the second time domain resource;
duration of each time domain resource in a plurality of time domain resources, wherein the plurality of time domain resources comprise the second time domain resource; or
a time interval between two time domain resources that are adjacent to each other in time domain in the plurality of time domain resources.

19. The method according to any one of claims 13 to 18, wherein in a case that the third information carries a plurality of indexes, the plurality of indexes are used to indicate a plurality of preambles received by the target device, the plurality of indexes comprise the first index, and the third information is used to indicate: information about time domain resources in which the plurality of preambles corresponding to the plurality of indexes are located; and/or information about channels on which the plurality of preambles corresponding to the plurality of indexes are located.

20. The method according to claim 19, wherein the information about the time domain resources in which the plurality of preambles are located comprises indexes of the time domain resources in which the plurality of preambles are located, and the indexes of the time domain resources in which the plurality of preambles are located increase in a sequence from early to late in time domain.

21. The method according to claim 20, wherein the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

22. The method according to claim 21, wherein a sequence in which the plurality of terminal devices transmit preambles on a plurality of time domain resources is the same as a sequence in which the plurality of terminal devices transmit terminal device identities on a plurality of time domain resources.

23. The method according to any one of claims 13 to 22, wherein a channel for transmitting the third information is a broadcast channel.

24. The method according to any one of claims 13 to 23, wherein the first terminal device receives the third information in a first time period, and a start location of the first time period is determined based on a transmitting time of the preamble.

25. The method according to claim 24, wherein the start location of the first time period is the transmitting time of the preamble; or
the start location of the first time period is separated from the transmitting time of the preamble by a first time interval.

26. The method according to claim 24 or 25, wherein the method further comprises:
in a case that the third information has not been received in the first time period, confirming, by the first terminal device, that contention resolution fails.

27. The method according to any one of claims 1 to 26, wherein the first terminal device receives the first information in a second time period, and a start location of the second time period is determined based on a transmitting time of the first-terminal device identity.

28. The method according to claim 27, wherein the start location of the second time period is the transmitting time of the first-terminal device identity; or
the start location of the second time period is separated from the transmitting time of the first-terminal device identity by a second time interval.

29. The method according to claim 27 or 28, wherein the method further comprises:
in a case that the first information has not been received in the second time period, confirming, by the first terminal device, that contention resolution fails.

30. The method according to any one of claims 1 to 29, wherein a channel for transmitting the preamble is the same as a channel for transmitting the first-terminal device identity.

31. A random access method, comprising:
receiving, by a target device, a preamble transmitted by a first terminal device;
transmitting, by the target device, a first index to the first terminal device, wherein the first index is used to indicate a preamble received by the target device;
receiving, by the target device, a terminal device identity transmitted by a terminal device; and
transmitting, by the target device, first information to the terminal device, wherein the first information comprises a terminal device identity received by the target device,
wherein the target device comprises a network device and/or a second terminal device.

32. The method according to claim 31, wherein the terminal device comprises the first terminal device, and the first terminal device corresponds to a first-terminal device identity,
in a case that the terminal device identity in the first information matches the first-terminal device identity, contention resolution is successful for the first terminal device; and/or
in a case that the terminal device identity in the first information does not match the first-terminal device identity, contention resolution fails for the first terminal device.

33. The method according to claim 31 or 32, wherein the first information further comprises a first radio network temporary identifier RNTI associated with the terminal device identity.

34. The method according to claim 33, wherein in a case that contention resolution is successful for the first terminal device, the target device communicates with the first terminal device based on the first RNTI.

35. The method according to claim 33 or 34, wherein the method further comprises:
transmitting, by the target device, configuration information to the first terminal device, wherein the configuration information is used to configure a length of the first RNTI for the first terminal device.

36. The method according to any one of claims 31 to 35, wherein the first terminal device corresponds to a first-terminal device identity, and the first-terminal device identity is generated by the first terminal device.

37. The method according to any one of claims 31 to 36, wherein the method further comprises:
transmitting, by the target device, second information to the first terminal device, wherein the second information is used to instruct the first terminal device to transmit the preamble, and the second information is information transmitted aperiodically.

38. The method according to claim 37, wherein a first time domain resource for transmitting the preamble is determined based on a reference time domain resource, and the reference time domain resource is used to receive the second information.

39. The method according to claim 38, wherein the first time domain resource is determined based on the reference time domain resource and a resource configuration parameter, and the resource configuration parameter is used to indicate one or more of following:
a time domain offset between the reference time domain resource and the first time domain resource;
duration of each time domain resource in a plurality of time domain resources, wherein the plurality of time domain resources comprise the first time domain resource;
a time interval between two time domain resources that are adjacent to each other in time domain in the plurality of time domain resources; or
a quantity of time domain resources in the plurality of time domain resources.

40. The method according to claim 39, wherein the resource configuration parameter is carried in the second information.

41. The method according to any one of claims 37 to 40, wherein the second information comprises a power adjustment parameter, and the power adjustment parameter is used to adjust a transmit power of the preamble and/or a transmit power of the terminal device identity.

42. The method according to any one of claims 31 to 37, wherein a time domain resource for receiving the terminal device identity is randomly selected by a terminal device corresponding to the terminal device identity, and the terminal device corresponding to the terminal device identity comprises the first terminal device.

43. The method according to any one of claims 31 to 42, wherein the first index is carried in third information, and the third information comprises one or more of following:
information for instructing the terminal device to access the target device based on a backoff mechanism;
a parameter used by the terminal device to access the target device based on the backoff mechanism; or
information for indicating a second time domain resource in which the terminal device transmits the terminal device identity corresponding to the terminal device.

44. The method according to claim 43, wherein in a case that the third information comprises the parameter, the parameter is used to indicate: a maximum quantity of attempts for the terminal device to access the target device; and/or
backoff time information for the terminal device to attempt to access the target device again.

45. The method according to claim 44, wherein if the parameter is used to indicate the maximum quantity of attempts, then in a case that contention resolution fails for the first terminal device and a quantity of attempts for the first terminal device to access the target device is greater than or equal to the maximum quantity of attempts, the first terminal device fails to access the target device.

46. The method according to claim 44, wherein in a case that the parameter is used to indicate the backoff time information, a first instant is an instant at which the first terminal device re-monitors the second information, and the first instant is an instant obtained after duration that is indicated by the backoff time information and that starts from an instant at which the first terminal device confirms that contention resolution has failed.

47. The method according to any one of claims 43 to 46, wherein in a case that the third information is used for indicating the second time domain resource for receiving the terminal device identity, the third information comprises one or more of following:
information for indicating a time domain offset between a time domain resource corresponding to a receiving time of the third information and the second time domain resource;
duration of each time domain resource in a plurality of time domain resources, wherein the plurality of time domain resources comprise the second time domain resource; or
a time interval between two time domain resources that are adjacent to each other in time domain in the plurality of time domain resources.

48. The method according to any one of claims 43 to 47, wherein in a case that the third information carries a plurality of indexes, the plurality of indexes are used to indicate a plurality of preambles received by the target device, the plurality of indexes comprise the first index, and the third information is used to indicate: information about time domain resources in which the plurality of preambles corresponding to the plurality of indexes are located; and/or information about channels on which the plurality of preambles corresponding to the plurality of indexes are located.

49. The method according to claim 48, wherein the information about the time domain resources in which the plurality of preambles are located comprises indexes of the time domain resources in which the plurality of preambles are located, and the indexes of the time domain resources in which the plurality of preambles are located increase in a sequence from early to late in time domain.

50. The method according to claim 49, wherein the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

51. The method according to claim 50, wherein a sequence in which the plurality of terminal devices transmit preambles on a plurality of time domain resources is the same as a sequence in which the plurality of terminal devices transmit terminal device identities on a plurality of time domain resources.

52. The method according to any one of claims 43 to 51, wherein a channel for transmitting the third information is a broadcast channel.

53. The method according to any one of claims 43 to 52, wherein the first terminal device receives the third information in a first time period, and a start location of the first time period is determined based on a transmitting time of the preamble.

54. The method according to claim 53, wherein the start location of the first time period is the transmitting time of the preamble; or
the start location of the first time period is separated from the transmitting time of the preamble by a first time interval.

55. The method according to claim 53 or 54, wherein in a case that the third information has not been received in the first time period, contention resolution fails for the first terminal device.

56. The method according to any one of claims 31 to 55, wherein the terminal device is the first terminal device, the first terminal device corresponds to a first-terminal device identity, the first terminal device receives the first information in a second time period, and a start location of the second time period is determined based on a transmitting time of the first-terminal device identity.

57. The method according to claim 56, wherein the start location of the second time period is the transmitting time of the first-terminal device identity; or
the start location of the second time period is separated from the transmitting time of the first-terminal device identity by a second time interval.

58. The method according to claim 56 or 57, wherein in a case that the first information has not been received in the second time period, contention resolution fails for the first terminal device.

59. The method according to any one of claims 31 to 58, wherein the terminal device is the first terminal device, the first terminal device corresponds to a first-terminal device identity, and a channel for transmitting the preamble is the same as a channel for transmitting the first-terminal device identity.

60. A terminal device, wherein the terminal device is a first terminal device and comprises:
a transmitting unit, configured to transmit a preamble to a target device; and
a receiving unit, configured to receive a first index transmitted by the target device, wherein the first index is used to indicate a preamble received by the target device,
wherein the transmitting unit is configured to transmit a first-terminal device identity to the target device in response to that the first index is the same as an index of the preamble; and
the receiving unit is configured to receive first information transmitted by the target device, wherein the first information comprises a terminal device identity received by the target device,
wherein the target device comprises a network device and/or a second terminal device.

61. The terminal device according to claim 60, wherein the terminal device comprises:
a first processing unit, configured to: confirm that contention resolution is successful in a case that the terminal device identity in the first information matches the first-terminal device identity; and/or
a second processing unit, configured to: confirm that contention resolution has failed in a case that the terminal device identity in the first information does not match the first-terminal device identity.

62. The terminal device according to claim 60 or 61, wherein the first information further comprises a first radio network temporary identifier RNTI associated with the terminal device identity.

63. The terminal device according to claim 62, wherein the receiving unit is further configured to receive configuration information transmitted by the target device, and the configuration information is used to configure a length of the first RNTI for the first terminal device.

64. The terminal device according to claim 62 or 63, wherein the terminal device further comprises:
a third processing unit, configured to: reserve a first RNTI associated with the first-terminal device identity in a case that the first terminal device confirms that contention resolution is successful.

65. The terminal device according to any one of claims 60 to 64, wherein the first-terminal device identity is generated by the first terminal device.

66. The terminal device according to any one of claims 60 to 65, wherein the receiving unit is further configured to receive second information transmitted by the target device, the second information is used to instruct the first terminal device to transmit the preamble, and the second information is information transmitted aperiodically, or the second information is information transmitted periodically.

67. The terminal device according to claim 66, wherein a first time domain resource for transmitting the preamble is determined based on a reference time domain resource, and the reference time domain resource is used to receive the second information.

68. The terminal device according to claim 67, wherein the first time domain resource is determined based on the reference time domain resource and a resource configuration parameter, and the resource configuration parameter is used to indicate one or more of following:
a time domain offset between the reference time domain resource and the first time domain resource;
duration of each time domain resource in a plurality of time domain resources, wherein the plurality of time domain resources comprise the first time domain resource;
a time interval between two time domain resources that are adjacent to each other in time domain in the plurality of time domain resources; or
a quantity of time domain resources in the plurality of time domain resources.

69. The terminal device according to claim 68, wherein the resource configuration parameter is carried in the second information.

70. The terminal device according to any one of claims 66 to 69, wherein the second information comprises a power adjustment parameter, and the power adjustment parameter is used to adjust a transmit power of the preamble and/or a transmit power of the first-terminal device identity.

71. The terminal device according to any one of claims 60 to 66, wherein a time domain resource for transmitting the first-terminal device identity is randomly selected by the first terminal device.

72. The terminal device according to any one of claims 60 to 71, wherein the first index is carried in third information, and the third information comprises one or more of following:
information for instructing the first terminal device to access a network based on a backoff mechanism;
a parameter used by the first terminal device to access a network based on the backoff mechanism; or
information for indicating a second time domain resource for transmitting the first-terminal device identity.

73. The terminal device according to claim 72, wherein in a case that the third information comprises the parameter, the parameter is used to indicate: a maximum quantity of attempts for the first terminal device to access the target device; and/or
backoff time information for the first terminal device to attempt to access the target device again.

74. The terminal device according to claim 73, wherein in a case that the parameter is used to indicate the maximum quantity of attempts,
the receiving unit is further configured to: re-monitor the second information in a case that the first terminal device confirms that contention resolution has failed and a quantity of attempts for the first terminal device to access the target device is less than the maximum quantity of attempts.

75. The terminal device according to claim 73 or 74, wherein in a case that the parameter is used to indicate the maximum quantity of attempts, the terminal device further comprises:
a fourth processing unit is further configured to: confirm that access to the target device has failed in a case that the first terminal device confirms that contention resolution has failed and a quantity of attempts for the first terminal device to access the target device is greater than or equal to the maximum quantity of attempts.

76. The terminal device according to claim 73, wherein in a case that the parameter is used to indicate the backoff time information,
the receiving unit is configured to re-monitor the second information at a first instant, wherein the first instant is an instant obtained after duration that is indicated by the backoff time information and that starts from an instant at which the first terminal device confirms that contention resolution has failed.

77. The terminal device according to any one of claims 72 to 76, wherein in a case that the third information is used for indicating the second time domain resource for transmitting the first-terminal device identity, the third information comprises one or more of following:
information for indicating a time domain offset between a time domain resource corresponding to a receiving time of the third information and the second time domain resource;
duration of each time domain resource in a plurality of time domain resources, wherein the plurality of time domain resources comprise the second time domain resource; or
a time interval between two time domain resources that are adjacent to each other in time domain in the plurality of time domain resources.

78. The terminal device according to any one of claims 72 to 77, wherein in a case that the third information carries a plurality of indexes, the plurality of indexes are used to indicate a plurality of preambles received by the target device, the plurality of indexes comprise the first index, and the third information is used to indicate: information about time domain resources in which the plurality of preambles corresponding to the plurality of indexes are located; and/or information about channels on which the plurality of preambles corresponding to the plurality of indexes are located.

79. The terminal device according to claim 78, wherein the information about the time domain resources in which the plurality of preambles are located comprises indexes of the time domain resources in which the plurality of preambles are located, and the indexes of the time domain resources in which the plurality of preambles are located increase in a sequence from early to late in time domain.

80. The terminal device according to claim 79, wherein the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

81. The terminal device according to claim 80, wherein a sequence in which the plurality of terminal devices transmit preambles on a plurality of time domain resources is the same as a sequence in which the plurality of terminal devices transmit terminal device identities on a plurality of time domain resources.

82. The terminal device according to any one of claims 72 to 81, wherein a channel for transmitting the third information is a broadcast channel.

83. The terminal device according to any one of claims 72 to 82, wherein the first terminal device receives the third information in a first time period, and a start location of the first time period is determined based on a transmitting time of the preamble.

84. The terminal device according to claim 83, wherein the start location of the first time period is the transmitting time of the preamble; or the start location of the first time period is separated from the transmitting time of the preamble by a first time interval.

85. The terminal device according to claim 83 or 84, wherein the terminal device further comprises:
a fifth processing unit, configured to: confirm that contention resolution has failed in a case that the third information has not been received in the first time period.

86. The terminal device according to any one of claims 60 to 85, wherein the first terminal device receives the first information in a second time period, and a start location of the second time period is determined based on a transmitting time of the first-terminal device identity.

87. The terminal device according to claim 86, wherein the start location of the second time period is the transmitting time of the first-terminal device identity; or
the start location of the second time period is separated from the transmitting time of the first-terminal device identity by a second time interval.

88. The terminal device according to claim 86 or 87, wherein the terminal device further comprises:
a sixth processing unit, configured to: confirm that contention resolution has failed in a case that the first information has not been received in the second time period.

89. The terminal device according to any one of claims 60 to 88, wherein a channel for transmitting the preamble is the same as a channel for transmitting the first-terminal device identity.

90. A communications device, wherein the communications device is a target device and comprises:
a receiving unit, configured to receive a preamble transmitted by a first terminal device;
a transmitting unit, configured to transmit a first index to the first terminal device, wherein the first index is used to indicate a preamble received by a target device,
wherein the receiving unit is configured to receive a terminal device identity transmitted by the terminal device; and
the transmitting unit is configured to transmit first information to the terminal device, and the first information comprises a terminal device identity received by the target device,
wherein the target device comprises a network device and/or a second terminal device.

91. The communications device according to claim 90, wherein the terminal device comprises the first terminal device, and the first terminal device corresponds to a first-terminal device identity; and
in a case that the terminal device identity in the first information matches the first-terminal device identity, contention resolution is successful for the first terminal device; and/or
in a case that the terminal device identity in the first information does not match the first-terminal device identity, contention resolution fails for the first terminal device.

92. The communications device according to claim 90 or 91, wherein the first information further comprises a first radio network temporary identifier RNTI associated with the terminal device identity.

93. The communications device according to claim 91, wherein in a case that contention resolution is successful for the first terminal device, the target device communicates with the first terminal device based on the first RNTI.

94. The communications device according to claim 92, wherein the transmitting unit is configured to transmit configuration information to the first terminal device, and the configuration information is used to configure a length of the first RNTI for the first terminal device.

95. The communications device according to any one of claims 90 to 94, wherein the first terminal device corresponds to a first-terminal device identity, and the first-terminal device identity is generated by the first terminal device.

96. The communications device according to any one of claims 90 to 95, wherein the transmitting unit is configured to transmit second information to the first terminal device, the second information is used to instruct the first terminal device to transmit the preamble, and the second information is information transmitted aperiodically, or the second information is information transmitted periodically.

97. The communications device according to claim 96, wherein a first time domain resource for transmitting the preamble is determined based on a reference time domain resource, and the reference time domain resource is used to receive the second information.

98. The communications device according to claim 97, wherein the first time domain resource is determined based on the reference time domain resource and a resource configuration parameter, and the resource configuration parameter is used to indicate one or more of following:
a time domain offset between the reference time domain resource and the first time domain resource;
duration of each time domain resource in a plurality of time domain resources, wherein the plurality of time domain resources comprise the first time domain resource;
a time interval between two time domain resources that are adjacent to each other in time domain in the plurality of time domain resources; or
a quantity of time domain resources in the plurality of time domain resources.

99. The communications device according to claim 98, wherein the resource configuration parameter is carried in the second information.

100. The communications device according to any one of claims 95 to 99, wherein the second information comprises a power adjustment parameter, and the power adjustment parameter is used to adjust a transmit power of the preamble and/or a transmit power of the terminal device identity.

101. The communications device according to any one of claims 90 to 96, wherein a time domain resource for receiving the terminal device identity is randomly selected by a terminal device corresponding to the terminal device identity, and the terminal device corresponding to the terminal device identity comprises the first terminal device.

102. The communications device according to any one of claims 90 to 101, wherein the first index is carried in third information, and the third information comprises one or more of following:
information for instructing the terminal device to access the target device based on a backoff mechanism;
a parameter used by the terminal device to access the target device based on the backoff mechanism; or
information for indicating a second time domain resource in which the terminal device transmits the terminal device identity corresponding to the terminal device.

103. The communications device according to claim 102, wherein in a case that the third information comprises the parameter, the parameter is used to indicate: a maximum quantity of attempts for the terminal device to access the target device; and/or
backoff time information for the terminal device to attempt to access the target device again.

104. The communications device according to claim 103, wherein if the parameter is used to indicate the maximum quantity of attempts, then in a case that contention resolution fails for the first terminal device and a quantity of attempts for the first terminal device to access the target device is greater than or equal to the maximum quantity of attempts, the first terminal device fails to access the target device.

105. The communications device according to claim 103 or 104, wherein in a case that the parameter is used to indicate the backoff time information, a first instant is an instant at which the first terminal device re-monitors the second information, and the first instant is an instant obtained after duration that is indicated by the backoff time information and that starts from an instant at which the first terminal device confirms that contention resolution has failed.

106. The communications device according to any one of claims 102 to 105, wherein in a case that the third information is used for indicating the second time domain resource for receiving the terminal device identity, the third information comprises one or more of following:
information for indicating a time domain offset between a time domain resource corresponding to a receiving time of the third information and the second time domain resource;
duration of each time domain resource in a plurality of time domain resources, wherein the plurality of time domain resources comprise the second time domain resource; or
a time interval between two time domain resources that are adjacent to each other in time domain in the plurality of time domain resources.

107. The communications device according to any one of claims 101 to 106, wherein in a case that the third information carries a plurality of indexes, the plurality of indexes are used to indicate a plurality of preambles received by the target device, the plurality of indexes comprise the first index, and the third information is used to indicate: information about time domain resources in which the plurality of preambles corresponding to the plurality of indexes are located; and/or information about channels on which the plurality of preambles corresponding to the plurality of indexes are located.

108. The communications device according to claim 107, wherein the information about the time domain resources in which the plurality of preambles are located comprises indexes of the time domain resources in which the plurality of preambles are located, and the indexes of the time domain resources in which the plurality of preambles are located increase in a sequence from early to late in time domain.

109. The communications device according to claim 108, wherein the plurality of preambles are transmitted by a plurality of terminal devices, and the time domain resources in which the plurality of preambles are located are in a one-to-one correspondence with time domain resources in which the plurality of terminal devices transmit a plurality of terminal device identities.

110. The communications device according to claim 109, wherein a sequence in which the plurality of terminal devices transmit preambles on a plurality of time domain resources is the same as a sequence in which the plurality of terminal devices transmit terminal device identities on a plurality of time domain resources.

111. The communications device according to any one of claims 102 to 110, wherein a channel for transmitting the third information is a broadcast channel.

112. The communications device according to any one of claims 102 to 111, wherein the first terminal device receives the third information in a first time period, and a start location of the first time period is determined based on a transmitting time of the preamble.

113. The communications device according to claim 112, wherein the start location of the first time period is the transmitting time of the preamble; or the start location of the first time period is separated from the transmitting time of the preamble by a first time interval.

114. The communications device according to claim 112 or 113, wherein in a case that the third information has not been received in the first time period, contention resolution fails for the first terminal device.

115. The communications device according to any one of claims 90 to 114, wherein the terminal device is the first terminal device, the first terminal device corresponds to a first-terminal device identity, the first terminal device receives the first information in a second time period, and a start location of the second time period is determined based on a transmitting time of the first-terminal device identity.

116. The communications device according to claim 115, wherein the start location of the second time period is the transmitting time of the first-terminal device identity; or
the start location of the second time period is separated from the transmitting time of the first-terminal device identity by a second time interval.

117. The communications device according to claim 115 or 116, wherein in a case that the first information has not been received in the second time period, contention resolution fails for the first terminal device.

118. The communications device according to any one of claims 90 to 117, wherein the terminal device is the first terminal device, the first terminal device corresponds to a first-terminal device identity, and a channel for transmitting the preamble is the same as a channel for transmitting the first-terminal device identity.

119. A terminal device, wherein the terminal device is a first terminal device, and comprises a transceiver, a memory, and a processor, the memory is configured to store a program, and the processor is configured to invoke the program in the memory and control the transceiver to receive or transmit a signal, to cause the terminal device to execute the method according to any one of claims 1 to 30.

120. A communications device, wherein the communications device is a target device, and comprises a transceiver, a memory, and a processor, the memory is configured to store a program, and the processor is configured to invoke the program in the memory and control the transceiver to receive or transmit a signal, to cause the network device to execute the method according to any one of claims 31 to 59.

121. An apparatus, comprising a processor configured to invoke a program from a memory, to cause the apparatus to execute the method according to any one of claims 1 to 59.

122. A chip, comprising a processor, configured to invoke a program from a memory to cause a device installed with the chip to execute the method according to any one of claims 1 to 59.

123. A computer-readable storage medium, wherein the computer-readable storage medium stores a program, and the program causes a computer to execute the method according to any one of claims 1 to 59.

124. A computer program product, comprising a program that causes a computer to execute the method according to any one of claims 1 to 59.

125. A computer program, wherein the computer program causes a computer to execute the method according to any one of claims 1 to 59.
